(19) Europäisches Patentamt
European Patent Office
Office européen des brevets

(11) **EP 4 443 881 A1**

(12) **EUROPEAN PATENT APPLICATION**

(43) Date of publication:
**09.10.2024 Bulletin 2024/41**

(51) International Patent Classification (IPC):
**H04N 19/513** (2014.01)

(21) Application number: **23216399.8**

(52) Cooperative Patent Classification (CPC):
**H04N 19/521**

(22) Date of filing: **13.12.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.04.2023 PCT/CN2023/085837
28.04.2023 US 202318309534**

(71) Applicant: **INTEL Corporation
Santa Clara, CA 95054 (US)**

(72) Inventors:
• **Holland, James
Folsom CA, 95630 (US)**
• **Hamdan, Muhammad
Palo Alto, CA, 94306 (US)**
• **Chong, Timothy
Palo Alto, 94306 (US)**
• **Xu, Lidong
Beijing, 100190 (CN)**
• **Zhou, Yang
Beijing, 100102 (CN)**

(74) Representative: **Samson & Partner Patentanwälte
mbB
Widenmayerstraße 6
80538 München (DE)**

(54) **METHODS AND APPARATUS TO DETERMINE CONFIDENCE OF MOTION VECTORS**

(57) Systems, apparatus, articles of manufacture, and methods are disclosed to determine confidence of motion vectors. Examples disclosed herein are to generate feature data associated with a motion vector, the motion vector generated based on a first block of pixel data in a first video frame and a second block of pixel data in a second video frame, determine a confidence score for the motion vector based on a model and the feature data, and concatenate the motion vector and the confidence score to output an estimated likelihood that the motion vector is accurate.

FIG. 1

EP 4 443 881 A1

**Description**

RELATED APPLICATION

This patent arises from a continuation of and claims foreign priority to PCT Patent Application No. PCT/CN2023/085837, which was filed on April 3, 2023. PCT Patent Application No. PCT/CN2023/085837 is hereby incorporated herein by reference in its entirety. Priority to PCT Patent Application No. PCT/CN2023/085837 is hereby claimed.

FIELD OF THE DISCLOSURE

This disclosure relates generally to video encoding and, more particularly, to methods and apparatus to determine confidence of motion vectors.

BACKGROUND

Videos include sequences of still image frame data. Typically, similarities exist between adjacent frames in the video sequence (e.g., between a frame *n* and an adjacent frame *n+1*). Thus, there is a likelihood that an object in frame *n* will also be present in frame *n+1*. For example, the object or a portion of the object is included in a first macroblock of image data in frame *n+1,* which is a rectangular block of pixels (e.g., a block of 8x8 pixels, 16x16 pixels, 32x32 pixels, etc.). Block matching estimation is performed to determine a second macroblock in frame n that most closely resembles the first macroblock. After the second macroblock is estimated, a motion vector is generated that includes a direction and distance from the second macroblock to the first macroblock. Because the temporal difference between frames *n* and *n+1* is known, calculations can be performed to determine the kinematics (e.g., velocity, etc.) of the object or portion of the object present in the first and second macroblocks.

BRIEF DESCRIPTION OF THE DRAWINGS

FIG. 1 is a block diagram of an example environment in which an example compute device operates to determine confidence scores of motion vectors.
FIG. 2 is a block diagram of an example implementation of the compute device of FIG. 1.
FIG. 3 is an illustration of an example table representing a data structure for example feature data used to determine the confidence scores of motion vectors.
FIG. 4 is a schematic illustration an example first macroblock associated with an example motion vector confidence determination.
FIG. 5 is a schematic illustration of an example neural network that can be implemented and/or trained using examples disclosed herein.
FIGS. 6-9 are flowcharts representative of example machine readable instructions and/or example operations that may be executed, instantiated, and/or performed by example programmable circuitry to implement the compute device 102 of FIG. 2.
FIG. 10 is a block diagram of an example processing platform including programmable circuitry structured to execute, instantiate, and/or perform the example machine readable instructions and/or perform the example operations of FIGS. 6-9 to implement the compute device 102 of FIG. 2.
FIG. 11 is a block diagram of an example implementation of the programmable circuitry of FIG. 10.
FIG. 12 is a block diagram of another example implementation of the programmable circuitry of FIG. 10.

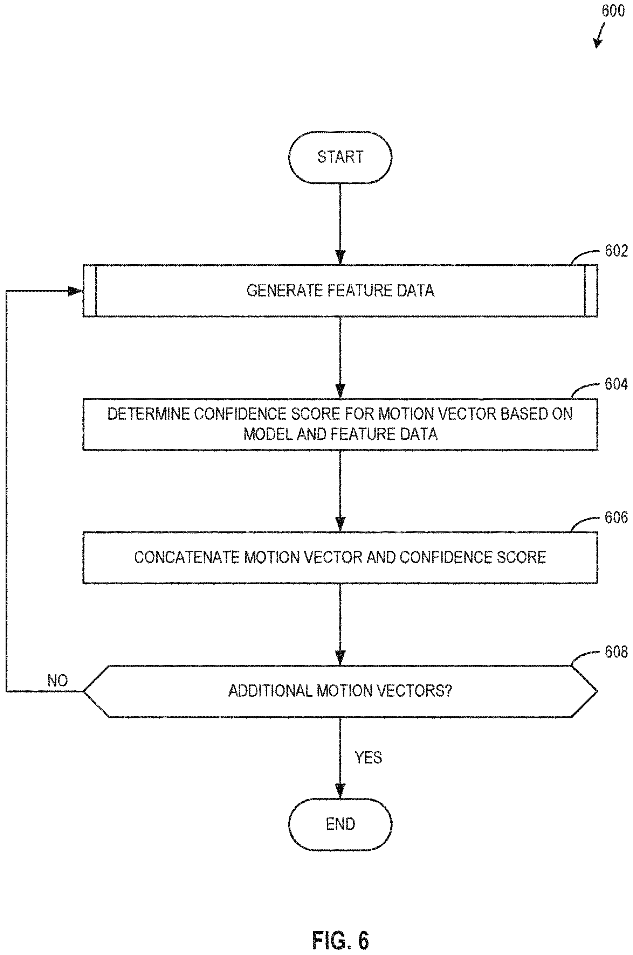

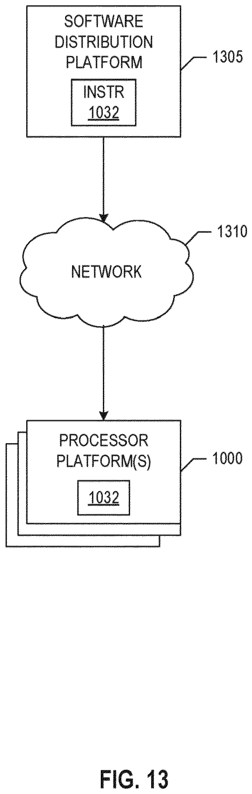

FIG. 13 is a block diagram of an example software/firmware/instructions distribution platform (e.g., one or more servers) to distribute software, instructions, and/or firmware (e.g., corresponding to the example machine readable instructions of FIGS. 6-9) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

DETAILED DESCRIPTION

In some instances, an objective of block-based motion estimation is to generate a motion vector (MV) based on a match between a first block of image data (e.g., source macroblock of pixels) in a video frame n and a second block of image data (e.g., matching macroblock of pixels) somewhere in a preceding video frame $n-1$ (temporally preceding the video frame n). Various block matching processes/algorithms exist to determine which block of pixels in frame $n$ most closely resembles the source macroblock in frame $n.$ An MV is used to represent the movement of an object (or portion of the object) in the source macroblock during the time period between a first frame (e.g., source frame, frame $n,$ etc.) and a second frame (e.g., search frame, frame $n-1,$ etc.).

For example, a typical score used for block-based motion estimation is the sum of absolute differences (SAD), which is minimized during a search of macroblocks of frame $n-1$ to determine the closest match to the source macroblock of frame $n.$ Other metrics, such as sum of absolute transform differences (SATD) provide different weighting to different spectral components which can compensate for local brightness changes. Variances of the absolute difference can be used as well. Motion vectors that minimize these metrics impute a "good match" but do not directly address a confidence that the MV represents the "true object motion vector."

Furthermore, the SAD can lead to ambiguous conclusions (e.g., "false positives") in low contrast scenarios when multiple MVs all have low (or even zero) SADs. Also, during high noise scenarios that have not been denoised prior to search, the various metrics (e.g., SADs, SATDs, etc.) can end up matching noise patterns, thereby leading to erroneous MVs that incorrectly appear to have high detail. A simple linear regression to correlate these metrics to the true end-point-error can suffer large outliers or be susceptible to overfitting.

In other words, due to an erroneous match of the matching macroblock to the source macroblock, the MV may not represent the "true motion" of the object from frame *n-1* to frame *n*. Despite the matching macroblock having the strongest pixel similarity to the source macroblock (e.g., due to change in ambient lighting, etc.), the matching macroblock may not show the same object as the source macroblock. Some applications or workloads assume the MV points to the same object on both frames to measure the "true motion" of the object. For example, some computer vision applications (e.g., self-driving cars, speed detection systems, etc.) perform motion analysis (e.g., a kinematic calculation, etc.), such as determining a velocity (distance traveled over time) of a moving object, based on the MV. As such, the accuracy of the MV is important for correctly tracking objects using video.

Examples disclosed herein improve the confidence classification of motion vectors (MVs). Furthermore, disclosed examples can determine confidence scores for MVs generated by general-purpose video encoders. As such, disclosed examples determine the likelihood that the MV corresponds to the true MV of the moving object. Moreover, disclosed examples reject outlier MVs to improve motion analyses and/or kinematic calculations of an object associated with the MVs. Disclosed examples can provide and/or infer a confidence score (e.g., a classification, a prediction, etc.), determine whether the confidence score satisfies a threshold (e.g., that separates different confidence classifications, etc.), and reject the MV from the true motion analysis when the confidence score does not satisfy the threshold. Additionally or alternatively, examples disclosed herein can provide the confidence score to a downstream consumer to provide a trustworthiness of the MV to be used in a motion analysis workload, motion detection, and/or kinematic calculation at the consumer end. As such, examples disclosed herein can be incorporated into an optical flow operation that generates pixel-precise motion vectors for numerous computer vision, graphics rendering, video processing or content creation workloads.

As used herein, the term "prediction error" of an MV refers to a pixel difference between the source macroblock and the matching macroblock associated with the MV. For example, the prediction error of the MV can be the SATD between the source macroblock and the matching macroblock. As used herein, the term "unbiased MV" refers to an MV generated based solely on the prediction error. For example, the unbiased MV of the source macroblock represents the offset between the source macroblock and the matching macroblock when the matching macroblock returns the lowest predication error relative to the source macroblock.

As used herein, the term "cost" refers to the average vector difference between an MV and one or more adjacent MVs. As used herein, the term "biased MV" refers to an MV generated based on the prediction error and the cost. For example, the biased MV of the source macroblock is the MV associated with the lowest sum of the prediction error and the cost. In some examples, the matching macroblock of the unbiased MV is different than the matching macroblock of the biased MV. As such, the term "unbiased macroblock" is used herein to refer to the matching macroblock associated with the unbiased MV. Similarly, the term "biased macroblock" is used herein to refer to the matching macroblock associated with the biased MV. As used herein, the term "distortion" refers to the sum of the prediction error between two macroblocks (e.g., the source and search macroblocks) and the cost of the MV associated with the two macroblocks. As used herein, the term "winning MV" or "winning macroblock" refers to the MV or macroblock that is generated or estimated based on a best match (e.g., biased, unbiased, etc.) between the source macroblock and the search macroblock. For example, when a compute device estimates a search macroblock that has the lowest prediction error, the resulting MV is considered the winning unbiased MV, and the search macroblock is considered the winning search macroblock. In another example, when a compute device estimates a search macroblock that has the lowest distortion, the resulting MV is considered the winning biased MV, and the search macroblock is considered the winning biased search macroblock.

Disclosed examples generate a plurality of alternate MVs that complement the selected, or winning MV as comparison points for how likely the winning MV is the "true" MV. That is, examples disclosed herein can optimize/minimize different features to generate the alternate MVs. While the winning MV may be determined based on a block matching algorithm (e.g., exhaustive search, three step search, diamond search, etc.), the alternate MVs can be determined by minimizing certain features of the alternate MVs. For example, disclosed examples can determine a minimum a prediction error (e.g., SATD, etc.) to generate a first alternate motion vector (e.g., an unbiased MV). Additionally, disclosed examples can determine a minimum distortion to generate a second alternate motion vector (e.g., a biased MV). Other alternate MVs can be generated to help determine the confidence score of the winning MV based on model(s) disclosed herein. For example, other alternate MVs can be generated based on a minimization of a color difference between the source macroblock and the search macroblock.

Disclosed examples generate feature data (e.g., spatial feature data, temporal feature data, raw metadata, raw features, etc.) that complement the selected, or winning, MV determined for a pair of macroblocks in adjacent video frames (e.g., the MV determined from the matching macroblock to the source macroblock described above) across multiple hierarchical layers (e.g., nested macroblocks within or surrounding the source macroblock described above). Further, disclosed examples generate feature data associated with at least one of a first MV (e.g., winning MV), a plurality of second motion vectors (e.g., biased MVs, unbiased MVs, alternate MVs, etc.), or a first block of pixel data in a first video frame (e.g., source macroblock in source frame). Disclosed examples combine (e.g., algebraically) the feature data to determine example virtual feature data. That is, disclosed examples can determine a plurality of combinations of the feature data to further describe relationships between two or more feature data points.

Furthermore, examples disclosed herein determine a confidence score for the winning MV based on a model, the alternate MVs, and/or the feature data (e.g., spatial, temporal, and/or virtual feature data, etc.). That is, disclosed examples can input at least the winning MV and the spatial, temporal, and virtual feature data into a neural network (e.g., a small multi-layer perceptron neural network, etc.) to determine a confidence score that the winning MV is the true MV. For example, disclosed examples can execute the neural network based on classification model(s) to classify the MV into one of multiple possible classifications (e.g., a near classification, an intermediate classification, or a far classification, etc.), which represent how similar the winning MV is to the true MV. Additionally or alternatively, disclosed examples can execute the neural network based on regression analysis model(s) to determine a probability that the winning MV is the true MV and/or to determine an end-point-error of the winning MV (relative to the ground truth MV). In some examples, linear regression is performed without a neural network to determine the end-point-error of the winning MV. In some examples, the selected or winning MV as used herein refers to the biased MV as described above.

Example methods and apparatus disclosed herein improve the accuracy of computer vision applications or workloads while being compatible with encoder motion estimation hardware and/or software. Disclosed examples can categorize the motion vector as an outlier when the confidence score does not satisfy a threshold. Additionally, disclosed examples can reject outlier MVs having high end-point-error to conserve computational resources, such as processing power, bandwidth, memory allocation, etc. Additionally, disclosed examples enable compute devices to use high resolution and high frame rate video sequences to perform motion analyses (e.g., kinematic calculations such as velocity, acceleration, etc.) on moving objects in the video while being compatible with existing performant encoder motion estimation hardware and/or software.

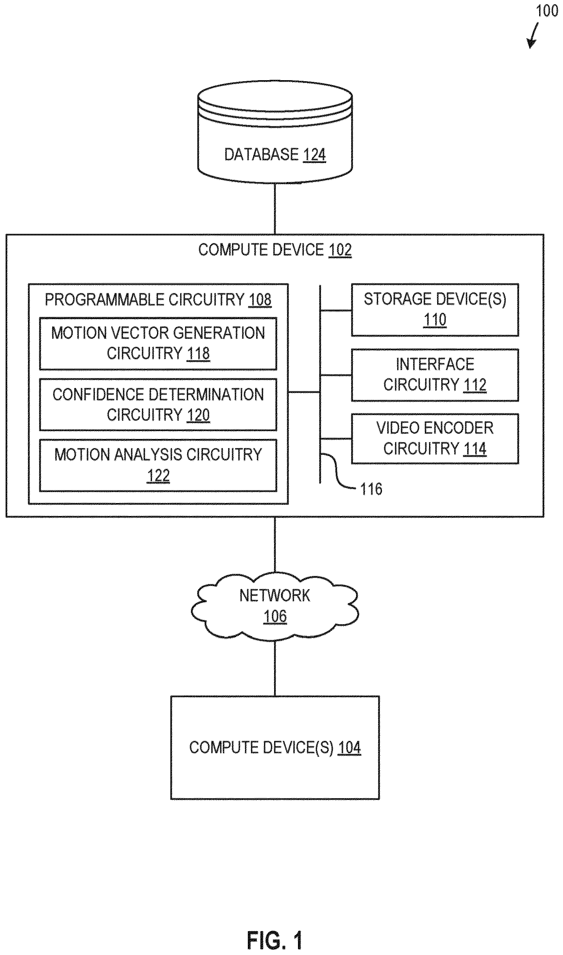

FIG. 1 is a block diagram of an example environment 100 in which an example compute device 102 operates to determine confidence scores of motion vectors. In the illustrative example of FIG. 1, the environment 100 includes the compute device 102 in communication with one or more other compute device(s) 104 via a network 106. The compute device 102 processes (e.g., encodes) image data of a video frame and determines motion vectors for macroblocks (e.g., 8x8, 16x16, 32x32 blocks of pixels, etc.) of the video frame. In some examples, the compute device 102 processes one or more motion analyses (e.g., velocity, etc.) of object(s) depicted in the macroblocks based on whether the confidence scores satisfy a threshold. In some examples, the compute device 102 provides the confidence scores and corresponding motion vectors of the encoded video frame to the compute device(s) 104. As such, the compute device(s) 104 can use similar or different criteria to determine whether the confidence scores represent a true motion of the object(s) represented in the macroblocks. That is, the compute device 102 and/or the computing device(s) 104 can process the one or more motion analyses on the object(s) in the video sequence based on the motion vectors and the confidence scores.

The example environment 100 illustrated in FIG. 1 includes the example compute device 102 constructed in accordance with teachings of this disclosure for processing (e.g., encoding) video images in a video sequence, estimating motion vectors for those video images, determining a confidence score for the motion vectors, and processing motion analyses based on the motion vector and the confidence score. The example compute device 102 can be a personal computer, a workstation, a server, a data center, etc. The example illustration of FIG. 1 shows details of the compute device 102 that can be substantially similar or identical to the compute device(s) 104. Although one example compute device 104 is illustrated in FIG. 1, a plurality of remote and/or local compute devices 104 can be connected to the compute device 102 via the network 106.

The example compute device 102 of FIG. 1 includes programmable circuitry 108 (e.g., hardware programmable circuitry). The programmable circuitry 108 of the example compute device 102 is a semiconductor-based hardware logic device. The programmable circuitry 108 may implement a central processor unit (CPU) of the compute device 102, may include any number of cores, and may be implemented, for example, by a processor commercially available from Intel® Corporation. The example compute device 102 further includes one or more example storage devices 110, example interface circuitry 112, example video encoder circuitry 114, an example bus 116, example motion vector generation circuitry 118, example confidence determination circuitry 120, and example motion analysis circuitry 122. Additionally, the example environment 100 includes an example database 124 communicatively coupled to the compute device 102.

The compute device 102 of FIG. 1 includes the storage device(s) 110 to store data relevant to examples disclosed herein. The storage device(s) 110 can include one or more volatile memory devices (e.g., static random access memory, dynamic random access memory, etc.) and/or one or more non-volatile memory devices (e.g., flash memory, etc.). In some examples, the storage device(s) 110 store software, values, instructions, thresholds, etc. For example, the storage device(s) 110 can store video encoding software or instructions that the confidence determination circuitry 118 executes to encode video sequences, estimate motion vectors, etc.

The example compute device 102 of FIG. 1 includes the interface circuitry 112 to send (e.g., transmit) and/or receive data (e.g., motion vectors, video bitstreams, confidence scores, etc.) to other systems and/or devices (e.g.,

compute device(s) 104) via the network 106. The example interface circuitry 112 can use protocols (e.g., Transmission Control Protocol, Internet Protocol, etc.) to communicate and/or transmit data to/from other devices (e.g., the compute device(s) 104). In some examples, the interface circuitry 112 also communicates data between other integrated circuitry (e.g., programmable circuitry 108, storage device(s) 110, etc.) of the compute device 102.

The example computing device 102 of FIG. 1 includes the video encoder circuitry 114 to encode video sequences for transmission to the computing device(s) 104. The video encoding circuitry 114 can be integrated circuitry that is programmed to compress videos based on video coding standards, such as MPEG-1, H.262, MPEG-2, etc. In some examples, the video encoder circuitry 114 can perform motion estimation of the video sequence to generate motion vectors for video coding, compression, and/or motion analysis. In some examples, the confidence determination circuitry 120 determines confidence scores for the motion vectors generated by the video encoder circuitry 114 based on features (e.g., metadata) associated with the motion vectors, macroblocks, video sequence, etc.

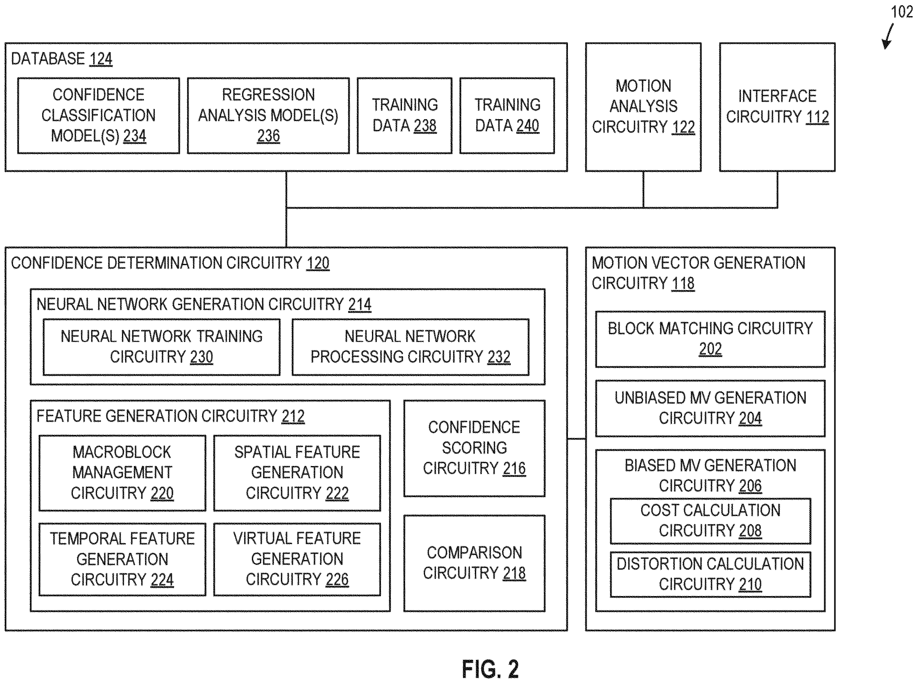

The example compute device 102 of FIG. 1 includes the motion vector generation circuitry 118 (MV generation circuitry 118) to generate a winning MV (e.g., cost winning MV, biased MV, etc.) based on a first block of pixel data (source macroblock) in a first video frame (source frame) and a second block of pixel data (matching macroblock) in a second video frame (search frame) different than (e.g., temporally adjacent to) the first video frame. The MV generation circuitry 118 can match the source macroblock to a block of pixels in the second video frame to determine an unbiased macroblock (as described above) and an unbiased MV associated with the unbiased macroblock. That is, the MV generation circuitry 118 can determine which macroblock of the search frame returns the lowest prediction error (e.g., SATD, etc.) relative to the source macroblock to determine the unbiased MV. Furthermore, the MV generation circuitry 118 can determine which macroblock of the search frame returns the lowest sum of the prediction error and a cost (as described above) to determine a biased macroblock and a biased MV associated with the biased macroblock. The MV generation circuitry 118 is described further in connection with FIG. 2.

The example compute device 102 of FIG. 1 includes the confidence determination circuitry 120 to determine confidence scores for winning MVs obtained from the MV generation circuitry 118. The confidence determination circuitry 120 can generate metadata or raw features (e.g., spatial feature data, temporal feature data, etc.) of the MVs and/or the source macroblock to be used as inputs to a neural network. In some examples, the confidence determination circuitry 120 calculates virtual feature data based on the raw features as additional inputs to the neural network. Furthermore, the confidence determination circuitry 120 can execute the neural network to determine a confidence score for the winning MV based on the inputs.

In some examples, the confidence score is one of a near, intermediate, or far classification of the winning MV, which indicates how similar the winning MV is to the true MV. In some examples, the confidence score is a probability that the winning MV is the same as the true MV. Additionally, the confidence determination circuitry 120 can compare the confidence score to a confidence threshold to determine whether the winning MV is trustworthy. In other words, the confidence determination circuitry 120 can determine whether the winning MV is similar enough to the true MV to be used for motion analysis.

The example computing device 102 of FIG. 1 includes the motion analysis circuitry 122 to perform kinematic calculations based on the winning MV. For example, the motion analysis circuitry 122 determines the velocity of an object depicted in the source macroblock and the matching macroblock. A time difference between the source and search video frames is known, and as such, the motion analysis circuitry 122 can determine the velocity of the object based on the magnitude of the winning MV and the time difference. In another example, the motion analysis circuitry 122 can determine an acceleration of the object based on multiple winning MVs and time differences between multiple video frames.

Additionally or alternatively, the confidence determination circuitry 120 can provide the confidence scores to the interface circuitry 112 for transmission to the computing device(s) 104. For example, the confidence determination circuitry 120 can link the confidence score with the winning MV, the source macroblock, and/or the source video frame via an identifier, which can be transmitted to the computing device(s) 104 via the interface circuitry 112. Furthermore, the confidence determination circuitry 120 can provide confidence scores to the video encoder circuitry 114, and the video encoder circuitry 114 can combine the confidence scores and the winning MVs with the encoded video bitstream. The interface circuitry 112 can then transmit the video bitstream with the confidence scores to the computing device(s) 104. As such, the computing device(s) 104 can perform motion analyses (e.g., velocity calculations, motion detection, etc.) similar and/or different to those performed by the motion analysis circuitry 122.

FIG. 2 is a block diagram of an example implementation of the confidence determination circuitry 120 of FIG. 1 to generate a confidence score for the winning MV (biased MV) associated with the source macroblock in the source video frame and the biased macroblock in the search (e.g., preceding or subsequent) video frame (e.g., pointing from the biased macroblock to the source macroblock), classify the winning MV based on the confidence score, and to determine whether the MV is eligible for use in motion analyses (e.g., calculations) corresponding to movement of an object depicted in the source macroblock. The confidence determination circuitry 120 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the confidence determination circuitry 120 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

As shown in the illustrated example of FIG. 2, the motion vector generation circuitry 118 includes example block matching circuitry 202, example unbiased motion vector generation circuitry 204, and example biased motion vector generation circuitry 206. Further, the biased motion vector generation circuitry 206 includes example cost calculation circuitry 208 and example distortion calculation circuitry 210. Additionally shown in the illustrated example of FIG. 2, the confidence determination circuitry 120 includes example feature generation circuitry 212, example neural network generation circuitry 214, example confidence scoring circuitry 216, and example comparison circuitry 218. Further, the feature generation circuitry 212 includes example macroblock management circuitry 220, example spatial feature generation circuitry 222, example temporal feature generation circuitry 224, and example virtual feature generation circuitry 226. The neural network generation circuitry 214 includes example neural network training circuitry 230, and example neural network processing circuitry 232.

As illustrated in the example of FIG. 2, the confidence determination circuitry 120 is integrated and/or communicatively coupled with the motion vector generation circuitry 118 and the motion analysis circuitry 122 (e.g., via the bus 116 of FIG. 1, etc.). Furthermore, the confidence determination circuitry 120 is coupled to the database 124 via a wired connection (e.g., local area network, etc.) and/or a wireless connection (e.g., wide area network, etc.). As such, the neural network generation circuitry 214 can create, update, access, and/or train example confidence classification model(s) 234 and/or example regression analysis model(s) 236. For example, the neural network generation circuitry 214 can train the confidence classification model(s) 234 based on example first or classification training data 238. Additionally or alternatively, the neural network generation circuitry 214 can train the regression analysis model(s) 236 based on example second or prediction training data 240 stored in the database 124. In some examples, the database 124 is distributed over multiple locations, data stores, devices, etc.

The MV generation circuitry 118 of FIG. 2 generates one or more MVs based on pixel data from at least the source video frame and the search video frame of a video sequence. In some examples, the MV generation circuitry 118 is instantiated by programmable circuitry executing MV generation instructions and/or configured to perform operations such as those represented by the flowchart(s) of FIGS. 6-8.

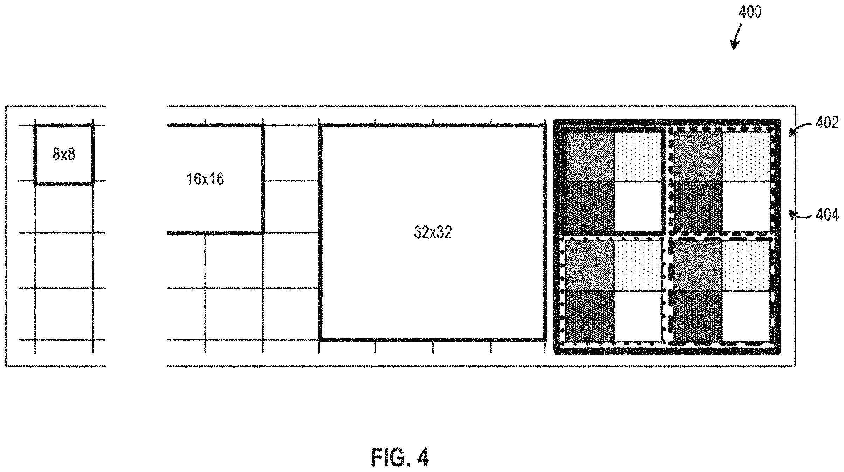

The MV generation circuitry 118 includes the block matching circuitry 202 to identify the source macroblock of the source video frame, such as a 16x16 block of pixels with an upper left pixel at a frame coordinate position of (0,0). The block matching circuitry 202 can then estimate a plurality of potential macroblock matches in the search frame that are likely to be match the source macroblock. For example, the block matching circuitry 202 can perform SATD operations to determine a pixel difference between the source macroblock and the potential macroblock matches in the search video frame. In some examples, the block matching circuitry 202 estimates matches for the source macroblock and nested macroblocks within the source macroblock. For example, the source macroblock can be a 32x32 pixel block, and the nested macroblock can be a 16x16 pixel block within the source macroblock. As such, the MV generation circuitry 118 can generate multiple biased and unbiased MVs corresponding to the nested macroblocks and the source macroblock. Example configurations and implementations of nested macroblocks are described in connection with FIG. 4. In some examples, the block matching circuitry 202 is instantiated by programmable circuitry executing block matching instructions and/or configured to perform operations such as those represented by the flowchart(s) of FIGS. 6-8.

The block matching circuitry 202 can focus a search for the potential macroblock matches to one or more search regions of the second frame that includes and/or does not include the frame coordinate position of the source macroblock. The block matching circuitry 202 can determine the search regions based on a search algorithm, a neural network model, user input(s), etc. In some examples, the block matching circuitry 202 determines (or estimates) an unbiased macroblock as being one of the potential macroblock matches associated with the lowest SATD relative to the source macroblock. Additionally or alternatively, the block matching circuitry 202 can execute or perform other block matching algorithms or operations to estimate the unbiased macroblock based on the source macroblock, such as SAD, optimized hierarchical block matching (OHBM), etc.

The MV generation circuitry 118 includes the unbiased MV generation circuitry 204 to determine a first alternate motion vector (e.g., the winning unbiased MV, etc.) based on the source macroblock and the winning unbiased search macroblock. In some examples, the unbiased MV generation circuitry 204 is instantiated by programmable circuitry executing unbiased MV generation instructions and/or configured to perform operations such as those represented by the flowchart(s) of FIGS. 6-8. The unbiased MV generation circuitry 204 obtains an identifier (e.g., location, etc.) of the unbiased macroblock from the block matching circuitry 202 and generates the unbiased MV based on first frame coordinates (e.g., x-axis and y-axis coordinates of upper left pixel) of the source macroblock and second frame coordinates of the unbiased macroblock. For example, when the source frame is temporally subsequent to the search frame in the video sequence, the unbiased MV is a two-dimensional vector that provides an offset from the frame coordinates of the unbiased macroblock to the frame coordinates of the source macroblock (e.g., pointing from the unbiased macroblock to the source macroblock).

The MV generation circuitry 118 includes the biased MV generation circuitry 206 to determine a second alternate MV (e.g., the winning biased MV) based on the source macroblock and the winning biased search macroblock. In some examples, the biased MV generation circuitry 206 is instantiated by programmable circuitry executing biased MV generation instructions and/or configured to perform operations such as those represented by the flowchart(s) of FIGS. 6-8. The biased MV generation circuitry 206 determines the winning MV based on sum of the prediction error (e.g., SATD value, SAD value, etc.) between the source macroblock and the search macroblock and the cost of the winning biased MV.

To begin determination of the biased MV, the biased MV generation circuitry 206 obtains one or more of the potential macroblock matches from the block matching circuitry 202. Each one of the potential macroblock matches is associated with a potential biased MV. In some examples, the cost calculation circuitry 208 determines a cost of each of the potential biased MVs. For example, the cost calculation circuitry 208 finds the difference between a first potential MV and the MVs of macroblocks adjacent to the potential macroblock match. In some examples, the adjacent macroblocks touch the sides and corners of the potential matching macroblock, such that eight adjacent macroblocks and corresponding adjacent costs are considered. Furthermore, the cost calculation circuitry 208 can average the adjacent costs to determine a single cost for the potential macroblock match. In some examples, the cost calculation circuitry 208 is instantiated by programmable circuitry executing cost calculation instructions and/or configured to perform operations such as those represented by the flowchart(s) of FIGS. 6-8.

The biased MV generation circuitry 206 includes the distortion calculation circuitry 210 to determine distortion values associated with each of the potential biased MVs. In some examples, the distortion calculation circuitry 210 is instantiated by programmable circuitry executing distortion calculation instructions and/or configured to perform operations such as those represented by the flowchart(s) of FIGS. 6-8. In some examples, the distortion calculation circuitry 210 obtains the potential macroblock matches and the corresponding prediction errors from the block matching circuitry 202. Furthermore, the distortion calculation circuitry 210 obtains the costs corresponding to the potential biased MVs from the cost calculation circuitry 208. The distortion calculation circuitry 210 calculates the distortion for each potential biased MV based on a sum of the corresponding prediction error and cost.

The biased MV generation circuitry 206 can determine which of the potential biased MVs corresponds to the lowest distortion. For example, the biased MV generation circuitry 206 can sort the potential biased MVs based on distortion in ascending order. The biased MV generation circuitry 206 can then select the first occurrence of the ordered list to generate the winning biased MV. As such, the biased MV corresponds to the potential biased MV with the lowest distortion. In some examples, the biased MV is different than the unbiased MV, and the biased search macroblock is different than the unbiased search macroblock. However, in other examples, the biased MV is the same as the unbiased MV, and the biased macroblock is the same as the unbiased macroblock.

In some examples, the winning biased MV can be used to determine a velocity of an object depicted in the source macroblock and the search macroblock. However, as previously mentioned, the winning MV may be incorrect due to low contrast scenarios when multiple MVs have low (or even zero) prediction errors (e.g., SADs, etc.). Further, high noise scenarios can cause the block matching circuitry 202 to estimate noise patterns rather than true signals, resulting in erroneous potential macroblock matches and MVs. As such, the compute device 102 includes the confidence determination circuitry 120 to determine a confidence score for the winning biased MV. Moreover, the confidence determination circuitry 120 outputs the winning MV to the motion analysis circuitry 122 when the confidence score satisfies one or more thresholds and/or discards the winning MV when the confidence score does not satisfy the one or more thresholds. Thus, examples disclosed herein improve the reliability of the compute device 102 and/or the compute device(s) 104 to analyze the true motion (e.g., real kinematics) of an object while discarding fewer results and allocating fewer compute resources to calculations on erroneous winning MVs. Furthermore, disclosed examples conserve network bandwidth and compute power when erroneous MVs are discarded rather than transmitted to the compute device(s) 104. Additionally or alternatively, the confidence determination circuitry 120 provides the confidence score to the user or end customer to represent a level of trustworthiness of the winning MV.

In some examples, the confidence determination circuitry 120 is instantiated by programmable circuitry executing confidence determination instructions and/or configured to perform operations such as those represented by the flowchart(s) of FIGS. 6-8. The confidence determination circuitry 120 of the illustrated example of FIG. 2 can generate feature data (e.g., metadata including spatial features, temporal features, etc.). Furthermore, the example confidence determination circuitry 120 can execute a neural network based on the feature data, the biased MV, and the unbiased MV to generate a confidence score for the biased MV. In some examples, the confidence determination circuitry 120 can compare the confidence score to one or more thresholds, output the winning MV when the confidence score satisfies the threshold, and/or discard the winning MV when the confidence score does not satisfy the one or more thresholds.

The example confidence determination circuitry 120 of FIG. 2, includes the feature generation circuitry 212 to generate feature data (e.g., spatial feature data, temporal feature data, virtual feature data, etc.) associated with the biased MV, the unbiased MV, and/or the source macroblock. In some examples, the feature generation circuitry 212 is instantiated by programmable circuitry executing feature generation instructions and/or configured to perform operations such as those represented by the flowchart(s) of FIGS. 6-8. The feature generation circuitry 212 can generate additional spatial and temporal metadata to compliment the winning MV across multiple hierarchical (e.g., nested) layers. Furthermore, the feature generation circuitry 212 can generate virtual feature data based on combinations (e.g., algebraic combinations) of those raw metadata. The virtual feature data, the raw feature data, and the winning MV can be input to an example multi-layer perceptron neural network, which has been trained with ground truth data allowing for low-complexity classification of the likelihood the winning MV is close, intermediate, or far from the true motion vector.

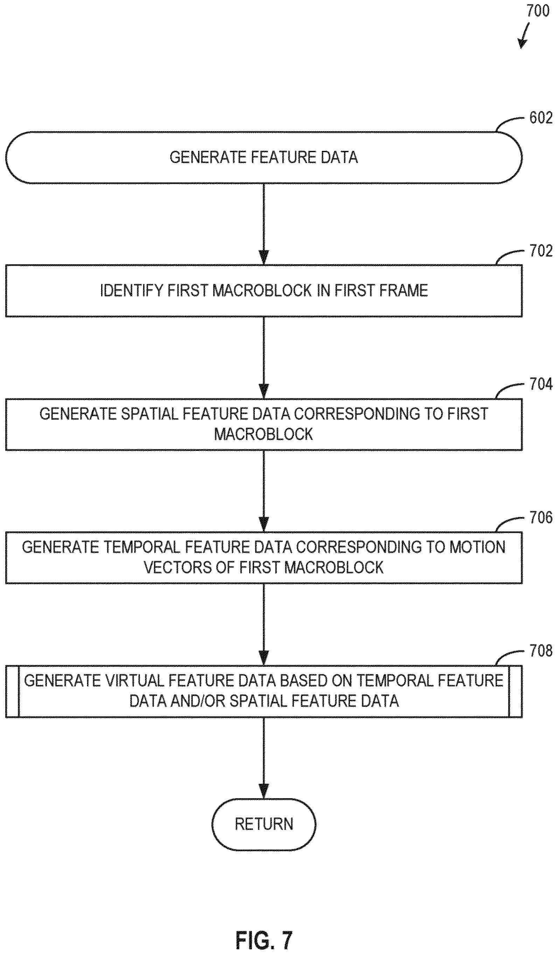

The example feature generation circuitry 212 of FIG. 2 includes the macroblock management circuitry 220 to identify source macroblocks and search macroblocks associated with the winning MVs. Additionally, the macroblock management circuitry 220 can obtain reference identifiers corresponding to the winning unbiased MVs and win In some examples, the macroblock management circuitry 220 is instantiated by programmable circuitry executing macroblock management instructions and/or configured to perform operations such as those represented by the flowchart(s) of FIG. 7.

In some examples, the macroblock management circuitry 220 can progress or "walk along" the rows and/or columns of the source frame to identify each source macroblock to be used for confidence score determinations. For example, the macroblock management circuitry 220 can identify a first source macroblock as a 32x32 sized block of pixels in the upper left corner of the source frame (e.g., coordinate (0,0), etc.) and subsequently identify a second source macroblock in the adjacent (e.g., abutting, diagonal, etc.) 32x32 pixel block. Additionally, the macroblock management circuitry 220 can identify nested macroblocks (e.g., 16x16 macroblocks, 8x8 macroblocks, etc.) within the source macroblock that can also be used to determine the confidence score. That is, the feature generation circuitry 212 can generate feature data for the nested macroblocks along with the source macroblock to be used as inputs to the executed neural network. As such, the nested macroblocks can be used to improve the accuracy of the neural network and the confidence score determination.

Furthermore, the macroblock management circuitry 220 can track (e.g., store identifiers of) source macroblocks associated with winning biased MVs for which confidence scores have been determined. In some examples, confidence scores for multiple source macroblocks are determined in parallel to increase the confidence determination process for the source frame. As such, the macroblock management circuitry 220 can help ensure duplicate confidence scores are not stored in the example storage device(s) 110 of FIG. 1.

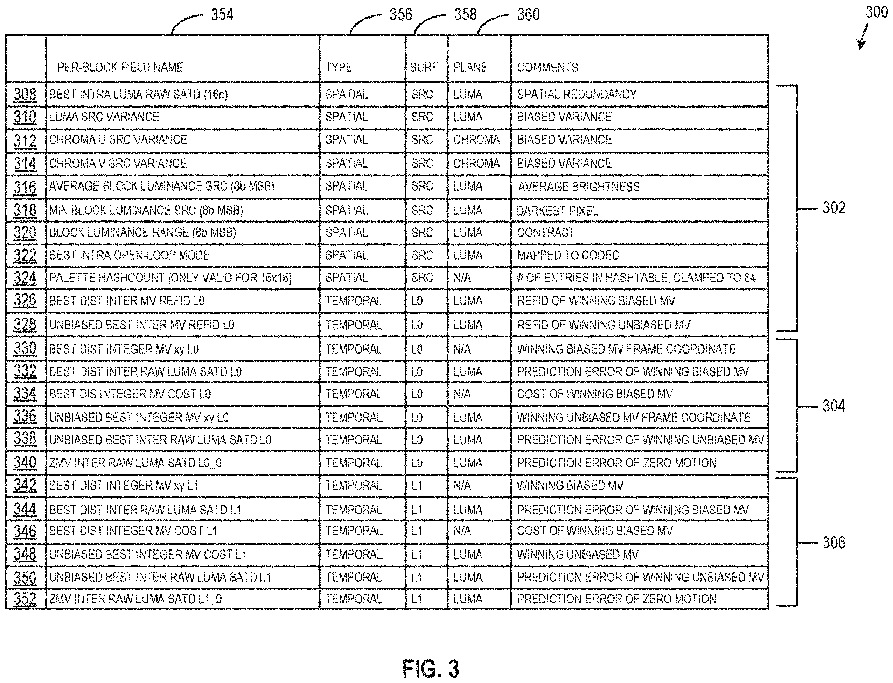

The example feature generation circuitry 212 of FIG. 2 includes the spatial feature generation circuitry 222 to generate spatial feature data associated with the source macroblock of the source frame. In some examples, the spatial feature generation circuitry 222 is instantiated by programmable circuitry executing spatial feature generation instructions and/or configured to perform operations such as those represented by the flowchart(s) of FIGS. 6 and 7. The spatial feature generation circuitry 222 can analyze the composition of the source macroblock and determine metadata, such as variance, intra SAD, block brightness, block contrast, unique color count, etc. Further examples and implementations of the spatial features that the spatial feature generation circuitry 222 can produce are described further in connection with FIG. 3.

The example feature generation circuitry 212 of FIG. 2 includes the temporal feature generation circuitry 224 to generate temporal feature data based on the winning biased MV, the winning unbiased MV, a zero MV (e.g., a third alternate MV), and/or the source macroblock. As used herein, the term "zero MV" refers to the MV with a zero value. Thus, for example, the prediction error of the zero MV refers to the SATD of the search macroblock at the same frame coordinate position as the source macroblock. In some examples, the temporal feature generation circuitry 224 is instantiated by programmable circuitry executing temporal feature generation instructions and/or configured to perform operations such as those represented by the flowchart(s) of FIGS. 6-8.

The temporal feature data can include temporal metrics such as the end points of the winning biased and unbiased MVs and the zero-motion (collocated) prediction error. In some examples, the temporal feature data are provided on the luma channel and for 8x8, 16x16, and 32x32 macroblock sizes. In some examples, the temporal feature generation circuitry 224 generates temporal features corresponding to biased, unbiased, and zero MVs on a first search frame (e.g., L0 frame) preceding the source frame and/or a second search frame (e.g., L1 frame) subsequent to the source frame. Further examples and implementations of the temporal features that the temporal feature generation circuitry 224 can produce are described further in connection with FIG. 3.

The example feature generation circuitry 212 of FIG. 2 includes the virtual feature generation circuitry 226 to generate virtual feature data based on the raw (spatial and temporal) features. In some examples, the virtual feature generation circuitry 226 is instantiated by programmable circuitry executing virtual feature generation instructions and/or configured to perform operations such as those represented by the flowchart(s) of FIGS. 6 and 7. The example virtual feature generation circuitry 226 can combine the spatial and/or temporal metadata to calculate the virtual features, which express important relationships amongst the various metrics. For example, the virtual feature data can represent how far the resultant biased and unbiased MVs are from each other, how much better the SATD of the resultant non-zero MV is from the collocated SATD, etc.

In some examples, the virtual feature generation circuitry 226 calculates a first virtual feature corresponding to a distance (e.g., Euclidean distance, etc.) between an end point of the biased MV and an end point of the unbiased MV. The smaller the example first virtual feature is, the higher the confidence score may be for the winning MV. For example, the first virtual feature can be expressed as Equation 1 below.

$$(\text{Eq. 1}) \qquad v_1 = \sqrt{\sum_{i=1}^{n}(unMV_i - MV_i)^2}$$

Where $v_1$ is the first virtual feature, *unMV* is the winning unbiased MV (e.g., in the L0 or L1 frame), and *MV* is the biased MV (e.g., in the search frame corresponding to the unbiased MV).

In some examples, the virtual feature generation circuitry 226 calculates a second virtual feature corresponding to a ratio of the SATD associated with the unbiased MV to the SATD associated with the biased MV. For example, the second virtual feature can be expressed as Equation 2 below.

$$(\text{Eq. 2}) \qquad v_2 = unPE/PE$$

Where $v_2$ is the second virtual feature, *unPE* is the prediction error (e.g., SATD) of the winning unbiased MV (e.g., in the L0 or L1 frame), and *PE* is the prediction error of the biased MV (e.g., in the search frame corresponding to the unbiased MV).

The example second virtual feature is less than or equal to one and describes how similar the results of the search (block matching) were for the MVs. In some examples, the second virtual feature provides an additional layer to the relationship represented by the first virtual feature. For example, when the unbiased and biased MVs are relatively far apart (e.g., opposite ends of the frame, etc.), and the ratio of the SATDs of the MVs is relatively similar (e.g., within 0.9-1.0, etc.), then the neural network may output a lower confidence score for the winning MV. Alternatively, when the unbiased and biased MVs are relatively far apart, and the ratio of the SATDs of the MVs is relatively different, then the neural network may output a higher confidence score for the winning MV because the cost may have positively influenced the biased MV generation.

In some examples, the virtual feature generation circuitry 226 calculates a third virtual feature corresponding to a ratio of the SATD associated with the unbiased MV to the SATD associated with the zero MV. In some examples, the smaller the example third virtual feature is, the higher the confidence score may be for the winning MV. For example, the third virtual feature can be expressed as Equation 3 below.

$$(\text{Eq. 3}) \qquad v_3 = unPE/zPE$$

Where $v_3$ is the third virtual feature and *zPE* is the prediction error of the zero MV (e.g., in the search frame corresponding to the unbiased MV). The example third virtual feature is also less than or equal to one and describes how accurate the search or match was for the source macroblock. That is, the larger the third virtual feature, the less likely the unbiased and biased MVs are correct because the object represented by the source macroblock is expected to be in motion. However, a third virtual feature close to one (e.g., 0.90, 0.99, etc.) is indicative of a stationary object, which may also indicate an erroneous match.

In some examples, the virtual feature generation circuitry 226 combines the first, second, and/or third virtual features to provide further input layers to the neural network that express the relationship between the biased, unbiased, and zero motion vectors. Additionally or alternatively, the virtual feature generation circuitry 226 can generate one or more other virtual features that can be suitable as neural network inputs to accurately estimate the confidence that the biased MV is the same as the ground truth MV. For example, another virtual feature can be a ratio of the biased prediction error to the cost of the biased motion vector. In some examples, the feature generation circuitry 212 normalizes the spatial feature data, the temporal feature data, and/or the virtual feature data prior before providing the input data to the neural network generation circuitry 214 and/or the confidence scoring circuitry 216.

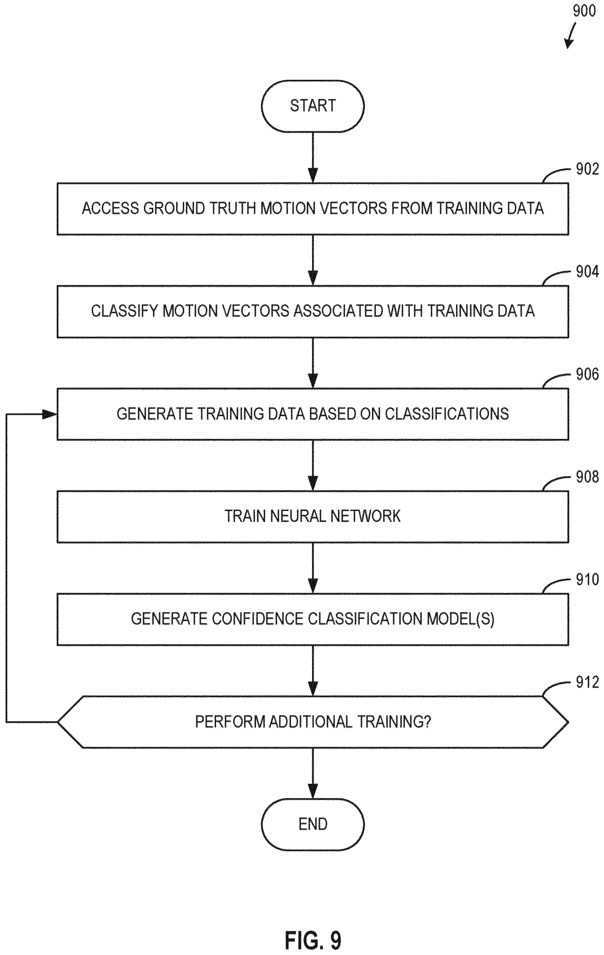

The confidence determination circuitry 120 of the illustrated example of FIG. 2 includes the neural network generation circuitry 214 to train the confidence classification model(s) 234 and the regression analysis model(s) 236 using the classification and prediction training data 238, 240, respectively. In some examples, the neural network generation circuitry 214 is instantiated by programmable circuitry executing neural network generation instructions and/or configured to perform operations such as those represented by the flowchart(s) of FIGS. 6 and 9.

The example neural network generator circuitry 214 of FIG. 2 includes the neural network training circuitry 230. The example neural network training circuitry 230 of FIG. 2 performs training of the neural network implemented by the neural network processing circuitry 232. The neural network training circuitry 230 of FIG. 2 can train the neural network based on the classification training data 238 and/or the prediction training data 240 stored in a database 124. In some examples, the neural network corresponds to a multi-layer perceptron (MLP) neural network including activations (e.g., rectified linear unit activations, etc.) and weights. In some examples, the neural network training circuitry 230 trains the neural network using a cross entropy loss function. Further details of example neural network(s) implemented by the example confidence determination circuitry 120 are described in connection with FIG. 4

In the example of FIG. 2, the confidence classification model(s) 234 can be trained using the classification training data 238. Similarly, the regression analysis model(s) 236 can be trained using the prediction training data 240. In some examples, the classification training data 238 and the prediction training data 240 previously generated video sequences with known (e.g., ground truth, etc.) motion vectors for the pixels and/or macroblocks of the corresponding video frames. Such video sequences can include video data standardized to train neural networks to detect, classify, and/or analyze the true motion of objects in novel video sequences. In some examples, video frame(s) that the compute device 102 processes, encodes, and/or analyzes are used as the classification training data 238 and/or the prediction training data 240.

The neural network training circuitry 230 trains the neural network implemented by the neural network processing circuitry 232 using the classification training data 238 to classify winning MV. The confidence classification model(s) 234 are generated as a result of the neural network training. In some examples, the confidence classification model(s) 234 can cause the MV to be classified into a first category, a second category, or a third category. The first category can indicate the MV is near the ground truth MV (e.g., an end-point-error (EPE) within three pixels or some other number of pixels, etc.), the second category can indicate the MV is intermediate to the ground truth MV (e.g., an EPE within 32 pixels or some other number of pixels, etc.), and the third category can indicate the MV is far from the ground truth MV (e.g., an EPE exceeding 32 pixels or some other number of pixels, etc.). The confidence classification model(s) 234 are stored in the database 124. In some examples, the confidence classification model(s) 234 can be stored in a different database and/or the storage device(s) 110 of FIG. 1.

Additionally or alternatively, the neural network training circuitry 230 trains the neural network implemented by the neural network processing circuitry 232 using the second training data 238 to predict the absolute EPE of the winning MV. The regression analysis model(s) 236 are generated as a result of the neural network training. The regression analysis model(s) 236 are stored in the database 124. In other examples, the regression analysis model(s) 236 can be stored in a different database and/or the storage device(s) 110 of FIG. 1.

The example confidence determination circuitry 120 of FIG. 2 includes the example confidence scoring circuitry 216 implement the confidence classification model(s) 234 to execute the neural network. Additionally or alternatively, the example confidence scoring circuitry 216 can implement the regression analysis model(s) 236 to execute the neural network. In some examples, the confidence scoring circuitry 216 is instantiated by programmable circuitry executing confidence scoring instructions and/or configured to perform operations such as those represented by the flowchart(s) of FIG. 6. The example confidence score determination circuitry 216 can obtain input(s) from the example feature generation circuitry 212 and/or the example motion vector generation circuitry 118 to generate output(s) based on the model(s) 234, 236. In some examples, the input(s) include spatial feature data, temporal feature data, virtual feature data, the winning biased MV, the winning unbiased MV, and/or the zero MV. The output(s) can include the winning biased MV accompanied by the category and/or the EPE corresponding to the winning biased MV. In some examples, the output(s) include an identifier or pointer associated with the winning biased MV.

In some examples, the motion vector generation circuitry 118, the feature generation circuitry 212, and/or the confidence scoring circuitry 216 provide the winning MV, the feature data, and/or the confidence score(s) (category and/or EPE), respectively, to the neural network training circuitry 230 as the classification training data 238 and/or the prediction training data 240 for feedback learning. Thus, the confidence classification model(s) 234 and/or the regression analysis model(s) 236 can be updated to provide for customized and/or improved confidence score determination for MVs. In some examples, the confidence score of the MVs can be verified based on other types of data, such as a sensor data from a sensor that detected motion of an object associated with the MV, such as a sensor coupled to a camera used to record the moving object.

The example confidence determination circuitry 120 of FIG. 2 includes the example comparison circuitry 218 to determine whether the confidence score satisfies one or more thresholds. In some examples, the comparison circuitry 218 is instantiated by programmable circuitry executing comparison instructions and/or configured to perform operations such as those represented by the flowchart(s) of FIG. 6. In some examples, the confidence score corresponds to a classification or category (e.g., the first, second, or third category, etc.), and the threshold corresponds to one or more of the categories. In such examples, the comparison circuitry 218 determines whether the output category from the confidence scoring circuitry 216 satisfies the threshold. For example, the threshold is the first category, and the comparison circuitry 218 outputs the winning MV when the confidence score corresponds to the first (near) category. In another example, the threshold is the first and second categories, and the comparison circuitry 218 outputs the winning MV when the confidence score corresponds to either the first category or the second (intermediate) category. Additionally or alternatively, the confidence score corresponds to an EPE, and the threshold corresponds to an EPE value (e.g., 30 pixels, etc.). In such examples, the comparison circuitry 218 determines whether the output EPE from the confidence scoring circuitry 216 satisfies the threshold (e.g., less than or equal to 30 pixels, etc.).

In some examples, the comparison circuitry 218 discards the winning MV when the confidence score does not satisfy the one or more thresholds. In some examples, the comparison circuitry 218 provides the winning MV to the motion analysis circuitry 122 to be used for analyzing the motion of an object. Additionally or alternatively, the comparison circuitry 218 provides the winning MV to the interface circuitry 112 to be transmitted to the compute device 104 for further processing and/or motion analysis of the object based on the winning MV.

FIG. 3 is an illustration of an example table 300 representing a data structure for the example feature data described above. FIG. 4 is a schematic illustration an example first macroblock 400 associated with an example MV confidence determination. The table 300 includes example first spatial feature data 302, example first temporal feature data 304, and example second temporal feature data 306.

The example spatial feature data 302 of FIG. 3 corresponds to the source macroblock of the source frame. As shown in the illustrated example of FIG. 3, the spatial feature data 302 includes example best intra luma raw SATD 308, example luma variance 310, example chroma U variance 312, example chroma V variance 314, example average macroblock luminance 316, example minimum macroblock luminance 318, example macroblock luminance range 320, example best intra open-loop mode 322, example palette hash count 324, example biased MV reference identifier 326, and example unbiased MV reference identifier 328.

The example first temporal feature data 304 of FIG. 3 corresponds to a first search frame (e.g., L0 search frame) that precedes the source frame. In the illustrated example of FIG. 3, the example first temporal feature data 304 includes example biased MV frame coordinate L0 330, example biased MV SATD L0 332, example biased MV cost L0 334, example unbiased MV frame coordinate L0 336, example unbiased MV SATD 338 L0, and example zero MV SATD L0 340. Similarly, the example second temporal feature data 3064 of FIG. 3 corresponds to a second search frame (e.g., L1 search frame) that follows the source frame. The example second temporal feature data 306 of FIG. 3 includes example biased MV frame coordinate L1 342, example biased MV SATD L1 344, example biased MV cost L1 346, example unbiased MV frame coordinate L1 348, example unbiased MV SATD L1 350, and example zero MV SATD L1 352.

In the illustrated example of FIG. 3, the table 300 includes columns representing descriptors of the feature data. The example table 300 includes example field names 354, example feature types 356, example frame surfaces 358, example image planes 360. The example field names 354 represent identifiers to be used by the confidence scoring circuitry 216 to determine which feature data to input to the neural network. The example feature types 356 represent the feature data as corresponding to spatial or temporal features. The example frame surfaces 358 represent the feature data as corresponding to the source frame, the preceding search frame (L0), or the subsequent search frame (L1). The example image planes 360 represent the feature data as corresponding to the achromatic (luma) portion of the image data or the chromatic (chroma) portion of the image data. In some examples, the confidence scoring circuitry 216 filters the feature data based on the field names 354, the feature types 356, the frame surfaces 358, and/or the image planes 360 prior to inputting the feature data into the neural network.

The example best intra luma raw SATD 308 represents a level of detail in the source macroblock. As such, when the best intra luma raw SATD 308 is low, the neural network may determine a low confidence score for the MV due to a lack of detail in the source macroblock. The example luma variance 310 represents a level of pixel variance in the achromatic portion of the image data of the source frame. The example chroma U variance 312 represents the pixel variance in the chroma U (blue minus luma) portion of the image data of the source frame. The example chroma V variance 314 represents the pixel variance in the chroma V (red minus luma) portion of the image data of the source frame. The example average macroblock luminance 316 represents the average brightness of the source macroblock. The example minimum macroblock luminance 318 represents the brightness of the darkest pixel in the source macroblock. The example macroblock luminance range 320 represents the contrast of the source macroblock. The example best intra open-loop mode 322 represents an angle or gradient of the pixel data in the source macroblock. The example palette hash count 324 represents the number of unique colors in the block. The example biased MV reference identifier 326 represents an indicator or pointer for the winning biased MV. The example unbiased MV reference identifier 328 represents an indicator or pointer for the winning unbiased MV. Other example spatial feature data 302 can be generated for the confidence score determination based on the type of model being used, the type of algorithm used to generate the winning MV, the type of image represented by the source macroblock, etc.

In some examples, the macroblock management circuitry 220 of FIG. 2 increments (e.g., walks) macroblocks of the first frame per row and/or per column to determine the first macroblock 400 for each MV confidence determination. In the illustrated example of FIG. 4, the first macroblock 400 is a 32x32 pixel block. However, the example first macroblock 400 can be an 8x8, 16x16, and/or 32x32 pixel block. In some examples, the first macroblock 400 includes a plurality of 16x16 macroblocks 402 and a plurality of 8x8 macroblocks 404. The first macroblock 400 of FIG. 4 includes four of the 16x16 macroblocks 402 and 16 of the 8x8 macroblocks 404 nested inside of the first macroblock 400. As such, the feature generation circuitry 212 of FIG. 2 can determine spatial and/or temporal feature data corresponding to the first macroblock 400 and respective ones of the 16x16 and 8x8 macroblocks 402, 404 associated with (e.g., nested within) the first macroblock 400.

In the illustrated example of FIG. 3, the first temporal feature data 304 corresponds to feature data of the MV when the second frame is temporally previous to the first frame (represented with "L0"). Additionally, the example second temporal feature data 306 corresponds to feature data of the MV when the second frame is temporally subsequent to the first frame (represented with "L1"). Thus, in some examples, the feature generation circuitry 212 of FIG. 2 determines temporal feature data based on frame(s) before and/or after the first frame. As shown in FIG. 3, the example first temporal feature data 304 corresponds to a first coordinate position of an end point of the biased MV in the second frame (e.g., previous frame), which can also correspond to the coordinate location of the second macroblock in the second frame. Additionally, the first temporal feature data 304 corresponds to a second coordinate position of an end point of the unbiased MV in the second frame, the prediction error of the winning biased MV, the cost of the winning biased MV, the prediction error of the winning unbiased MV, a prediction error (e.g., an inter luma raw SATD) of a zero MV for the first macroblock, etc.

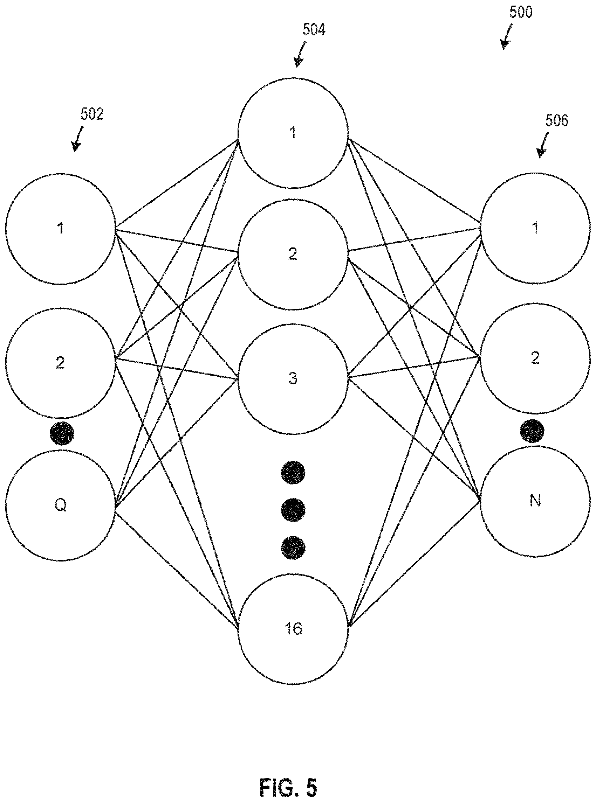

FIG. 5 is a schematic illustration of an example neural network 500 that can be implemented and/or trained using examples disclosed herein. In the illustrated example of FIG. 5, the neural network 500 is an MLP neural network with an example input layer 502, an example hidden layer of 16 nodes, and an example output layer 506. The example input layer 502 can accept a concatenation of spatial feature data and temporal feature data, such as shown in the table 300 of FIG. 3, and virtual feature data generated by the virtual feature generation circuitry 226 (FIG. 2). In some examples, the output layer 506 is a tri-class accuracy prediction. In some examples, the output layer 506 is an EPE prediction.

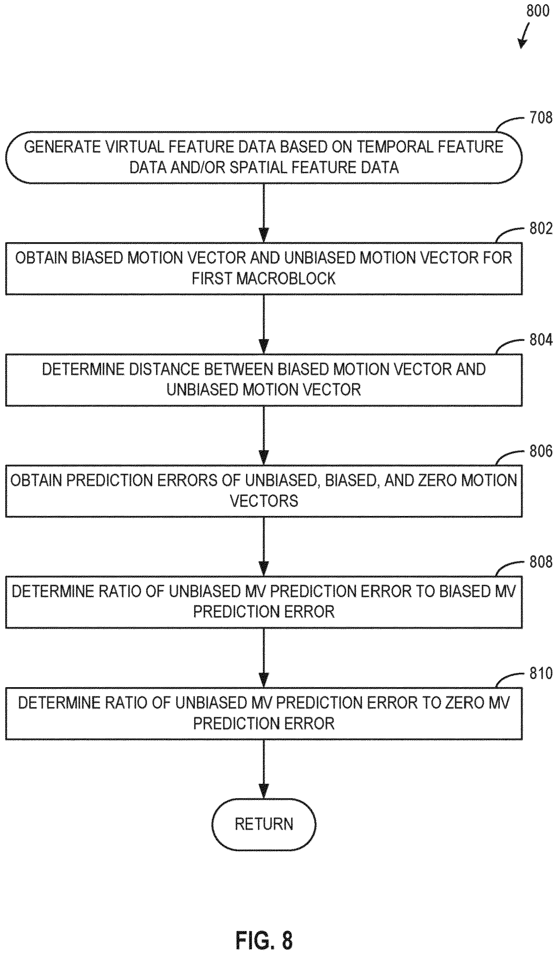

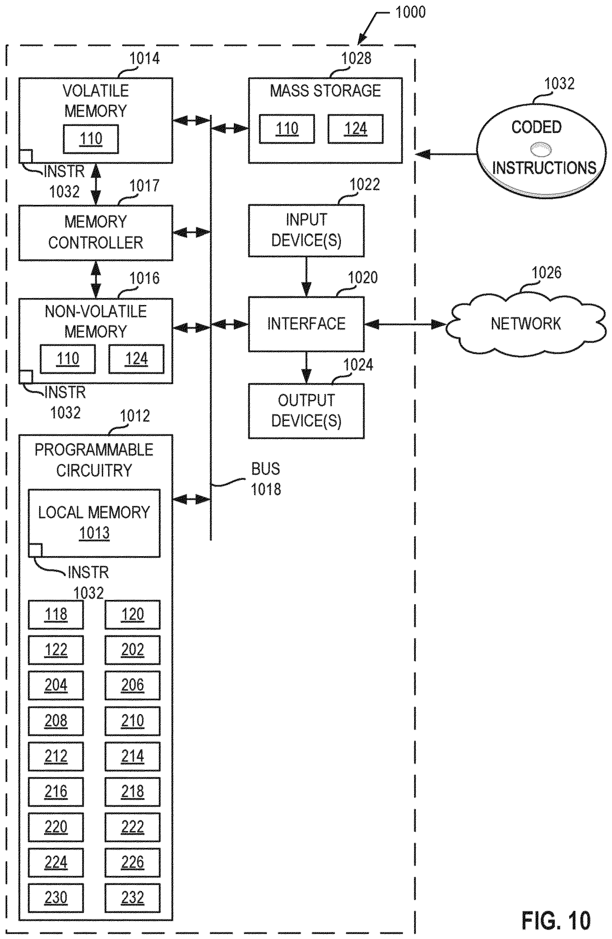

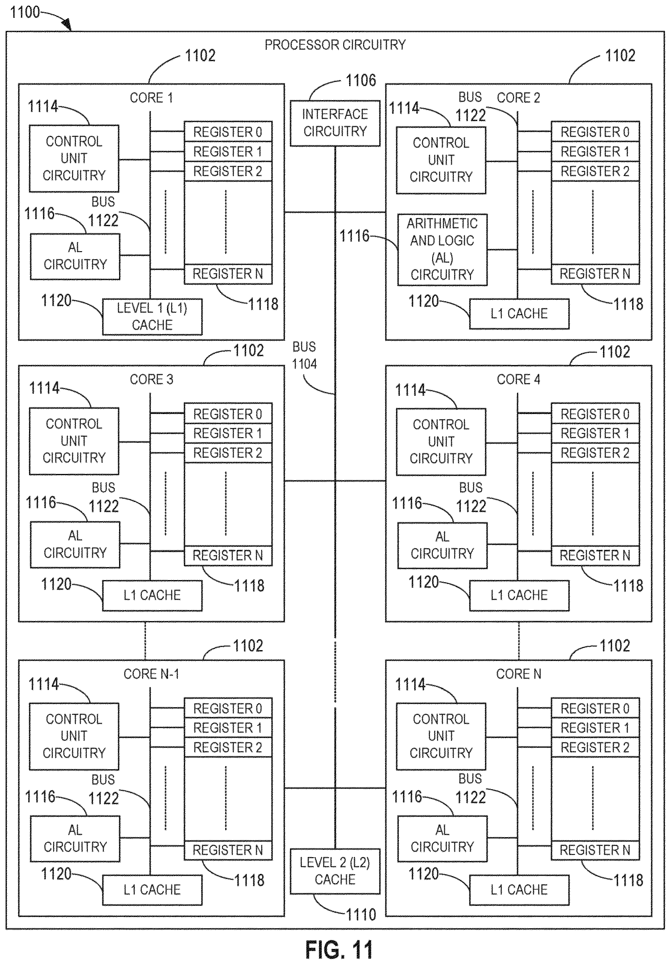

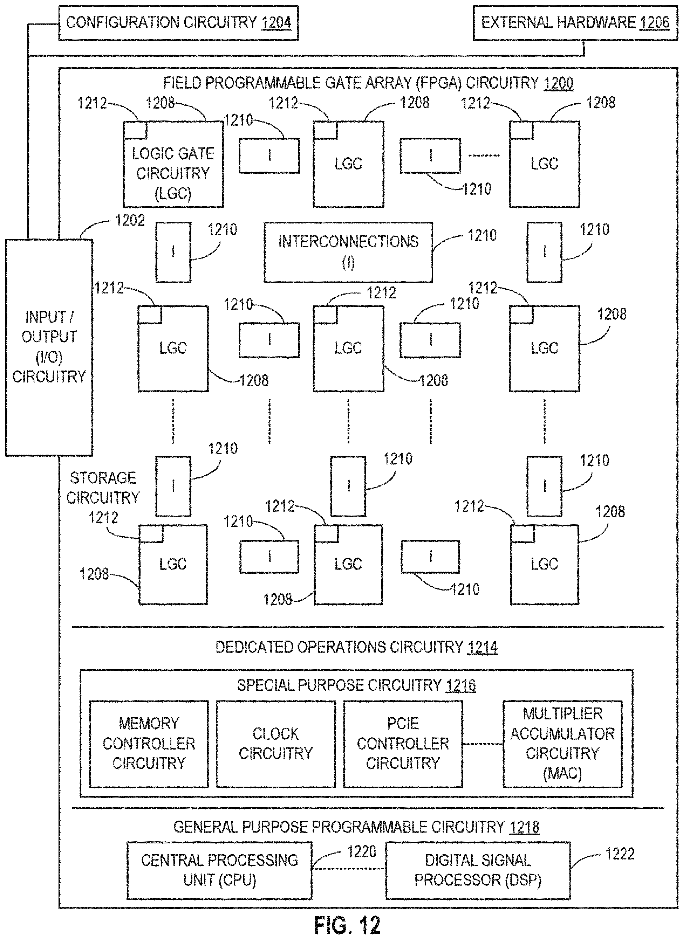

In some examples, the compute device 102 (FIG. 1) includes means for determining a confidence score for a MV. For example, the means for determining may be implemented by confidence determination circuitry 120. In some examples, the confidence determination circuitry 120 may be instantiated by programmable circuitry such as the example programmable circuitry 1012 of FIG. 10. For instance, the confidence determination circuitry 120 may be instantiated by the example microprocessor 1100 of FIG. 11 executing machine executable instructions such as those implemented by at least blocks 602-612 of FIG. 6, 702-708 of FIG. 7, 802-810 of FIG. 8, and 902-912 of FIG. 9. In some examples, the confidence determination circuitry 120 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the confidence determination circuitry 120 may be instantiated by any other combination of hardware, software, and/or firmware. For example, the confidence determination circuitry 120 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for determining includes means for generating MVs (e.g., winning biased MVs and winning unbiased MVs, etc.). For example, the means for generating MVs may be implemented by MV generation circuitry 118. In some examples, the MV generation circuitry 118 may be instantiated by programmable circuitry such as the example programmable circuitry 1012 of FIG. 10. For instance, the MV generation circuitry 118 may be instantiated by the example microprocessor 1100 of FIG. 11 executing machine executable instructions such as those implemented by at least blocks 602 of FIG. 6, 702-708 of FIG. 7, and 802-810 of FIG. 8. In some examples, the MV generation circuitry 118 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the MV generation circuitry 118 may be instantiated by any other combination of hardware, software, and/or firmware. For example, the MV generation circuitry 118 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for determining includes means for generating feature data (e.g., spatial feature data, temporal feature data, virtual feature data, etc.). For example, the means for generating feature data may be implemented by feature generation circuitry 212. In some examples, the feature generation circuitry 212 may be instantiated by programmable circuitry such as the example programmable circuitry 1012 of FIG. 10. For instance, the feature generation circuitry 212 may be instantiated by the example microprocessor 1100 of FIG. 11 executing machine executable instructions such as those implemented by at least blocks 602 of FIG. 6, 702-708 of FIG. 7, and 802-810 of FIG. 8. In some examples, the feature generation circuitry 212 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the feature generation circuitry 212 may be instantiated by any other combination of hardware, software, and/or firmware. For example, the feature generation circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for determining includes means for generating neural network(s) (e.g., confidence classification neural network, regression analysis neural network, etc.). For example, the means for generating neural network(s) may be implemented by neural network generation circuitry 214. In some examples, the neural network generation circuitry 214 may be instantiated by programmable circuitry such as the example programmable circuitry 1012 of FIG. 10. For instance, the neural network generation circuitry 214 may be instantiated by the example microprocessor 1100 of FIG. 11 executing machine executable instructions such as those implemented by at least blocks 902-912 of FIG. 9. In some examples, the neural network generation circuitry 214 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the neural network generation circuitry 214 may be instantiated by any other combination of hardware, software, and/or firmware. For example, the neural network generation circuitry 214 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for determining includes means for determining a confidence score of the MV based on the neural network. For example, the means for determining the confidence score may be implemented by confidence scoring circuitry 216. In some examples, the confidence scoring circuitry 216 may be instantiated by programmable circuitry such as the example programmable circuitry 1012 of FIG. 10. For instance, the confidence scoring circuitry 216 may be instantiated by the example microprocessor 1100 of FIG. 11 executing machine executable instructions such as those implemented by at least blocks 604 of FIG. 6. In some examples, the confidence scoring circuitry 216 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the confidence scoring circuitry 216 may be instantiated by any other combination of hardware, software, and/or firmware. For example, the confidence scoring circuitry 216 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for determining includes means for comparing the confidence score of the MV to a threshold. For example, the means for comparing may be implemented by comparison circuitry 218. In some examples, the comparison circuitry 218 may be instantiated by programmable circuitry such as the example programmable circuitry 1012 of FIG. 10. For instance, the comparison circuitry 218 may be instantiated by the example microprocessor 1100 of FIG. 11 executing machine executable instructions such as those implemented by at least blocks 606-612 of FIG. 6. In some examples, the comparison circuitry 218 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the comparison circuitry 218 may be instantiated by any other combination of hardware, software, and/or firmware. For example, the comparison circuitry 218 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the compute device 102 of FIG. 1 is illustrated in FIG. 2, one or more of the elements, processes, and/or devices illustrated in FIG. 2 may be combined, divided, re-arranged, omitted, eliminated, and/or implemented in any other way. Further, the example MV generation circuitry 118, the example feature generation circuitry 212, the example neural network generation circuitry 214, the example confidence scoring circuitry 216, the example comparison circuitry 218, the example block matching circuitry 202, the example unbiased MV generation circuitry 204, the example biased MV generation circuitry 206, the example cost calculation circuitry 208, the example distortion calculation circuitry 210, the example macroblock management circuitry 220, the example spatial feature generation circuitry 222, the example temporal feature generation circuitry 224, the example virtual feature generation circuitry 226, the example neural network training circuitry 230, the example neural network processing circuitry 232, and/or, more generally, the example compute device 102 of FIG. 2, may be implemented by hardware alone or by hardware in combination with software and/or firmware. Thus, for example, any of the example MV generation circuitry 118, the example feature generation circuitry 212, the example neural network generation circuitry 214, the example confidence scoring circuitry 216, the example comparison circuitry 218, the example block matching circuitry 202, the example unbiased MV generation circuitry 204, the example biased MV generation circuitry 206, the example cost calculation circuitry 208, the example distortion calculation circuitry 210, the example macroblock management circuitry 220, the example spatial feature generation circuitry 222, the example temporal feature generation circuitry 224, the example virtual feature generation circuitry 226, the example neural network training circuitry 230, the example neural network processing circuitry 232, and/or, more generally, the example compute device 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example compute device 102 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the compute device 102 of FIG. 2 and/or representative of example operations which may be performed by programmable circuitry to implement and/or instantiate the compute device 102 of FIG. 2, are shown in FIGS. 6-9. The machine readable instructions may be one or more executable programs or portion(s) of one or more executable programs for execution by programmable circuitry such as the processor circuitry 1012 shown in the example processor platform 1000 discussed below in connection with FIG. 10 and/or may be one or more function(s) or portion(s) of functions to be performed by the example programmable circuitry (e.g., an FPGA) discussed below in connection with FIGS. 11 and/or 12. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 6-9, many other methods of implementing the example compute device 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 6-9 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 6 is a flowchart representative of example machine readable instructions and/or example operations 600 that may be executed, instantiated, and/or performed by programmable circuitry to determine a confidence score for a winning MV of a first macroblock in a first video frame. The example machine-readable instructions and/or the example operations 600 of FIG. 6 begin at block 602, at which the confidence determination circuitry 120 (e.g., the feature generation circuitry 212, etc.) generates feature data associated with at least one of a winning motion vector, a plurality of alternate motion vectors, or a source block of pixel data in a source video frame. As previously, mentioned the feature data includes spatial, temporal, and virtual feature data associated with the first macroblock, the unbiased MV, and the biased MV.

At block 604, the confidence determination circuitry 120 (e.g., the confidence scoring circuitry 216, etc.) determine a confidence score of the winning motion vector based on a model and the feature data. For example, the confidence scoring circuitry 216 can execute a neural network using the confidence classification model(s) 234 and/or the regression analysis model(s) 236. At block 606, the confidence determination circuitry 120 concatenates the winning motion vector and the confidence score such that an estimated likelihood of the winning motion vector being a true motion vector is identifiable with the winning motion vector.

Additionally or alternatively, the confidence determination circuitry 120 determines whether the confidence score satisfies a threshold. For example, the comparison circuitry 216 can determine whether a classification output (e.g., first category associated with an EPE within 32 pixel) corresponds to a classification threshold (e.g., the first and second categories previously mentioned above). Furthermore, the confidence determination circuitry 120 can categorize the winning MV as an outlier when the confidence score does not satisfy the threshold or discard the MV when the confidence score does not satisfy the threshold.

Moreover, the confidence determination circuitry 120 can output the MV and the confidence score when the confidence score satisfies the threshold. For example, the confidence determination circuitry 120 can output the MV and the confidence score to the motion analysis circuitry 122. As such, the motion analysis circuitry 122 can perform a motion analysis (e.g., kinematic calculation of an object in the first macroblock, etc.) based on the MV. Additionally or alternatively, the comparison circuitry 218 can output the MV and the confidence score to the interface circuitry 112. As such, the interface circuitry 112 can transmit the MV and the confidence score to the compute device(s) 104 to be used in the same or different true motion analysis, calculation, determination, etc.

At block 608, the confidence determination circuitry 120 (e.g., the motion vector generation circuitry 118, the macroblock management circuitry 220, etc.) determines whether there are additional MVs for which confidence scores are to be determined. For example, the macroblock management circuitry 220 can walk the first frame to determine whether there are additional first macroblocks for which feature data has not been generated. When there are additional MVs needing confidence score determinations, the example operations 600 return to block 602. Otherwise, the example operations 600 end.

FIG. 7 is a flowchart representative of example machine readable instructions and/or example operations 700 that may be executed, instantiated, and/or performed by programmable circuitry to determine feature data associated with the MV. The example machine-readable instructions and/or the example operations 700 of FIG. 7 begin at block 702, at which the feature generation circuitry 212 (e.g., the macroblock management circuitry 220, etc.) identifies the first macroblock in the first frame for which spatial feature data is to be generated. For example, the macroblock management circuitry 220 finds a 32x32 pixel block and/or nested macroblocks in the first frame, determines whether feature data associated with the first macroblock have been generated, and command the feature generation circuitry 212 to proceed with feature data generation if applicable.

At block 704, the feature generation circuitry 212 (e.g., the spatial feature generation circuitry 222, etc.) generates spatial feature data corresponding to the first macroblock as described above in connection with FIGS. 2-3. At block 706, the feature generation circuitry 212 (e.g., the temporal feature generation circuitry 224, etc.) generates temporal feature data corresponding to the winning MVs of the first macroblock as described above in connection with FIGS. 2-3. At block 708, the feature generation circuitry 212 (e.g., the virtual feature generation circuitry 226, etc.) generates virtual feature data based on the spatial feature data and/or the temporal feature data as described above in connection with FIGS. 2-3. Following completion of block 708, the example operations 700 return to block 604 of FIG. 6.

FIG. 8 is a flowchart representative of example machine readable instructions and/or example operations 800 that may be executed, instantiated, and/or performed by programmable circuitry to generate the virtual feature data based on the spatial feature data and/or the temporal feature data. The example machine-readable instructions and/or the example operations 800 of FIG. 8 begin at block 802, at which the feature generation circuitry 212 (e.g., the virtual feature generation circuitry 226, etc.) obtains the biased MV and the unbiased MV for the first macroblock. For example, the virtual feature generation circuitry 226 requests the winning biased MV associated with the first macroblock from the biased MV generation circuitry 206 and the winning unbiased MV associated with the first macroblock from the unbiased MV generation circuitry 204.

At block 804, the feature generation circuitry 212 (e.g., the virtual feature generation circuitry 226, etc.) determines the distance between the unbiased MV and the biased MV. For example, the virtual feature generation circuitry 226 can calculate the Euclidean distance between a first end point of the biased MV and a second end point of the unbiased MV, wherein the first end point and the second end point are in the second frame (e.g., frame previous to the first frame). In other examples, the first and second end points are located in a frame subsequent to the first frame. At block 806, the feature generation circuitry 212 (e.g., the virtual feature generation circuitry 226, etc.) obtains the prediction errors of the unbiased MV, the biased MV, and a zero MV. For example, the virtual feature generation circuitry 226 can request the SATD corresponding to each of the unbiased, biased, and zero MVs from the block matching circuitry 202.

At block 808, the feature generation circuitry 212 (e.g., the virtual feature generation circuitry 226, etc.) determines a ratio of unbiased MV prediction error to biased MV prediction error. For example, the virtual feature generation circuitry 226 divides the SATD of the unbiased MV by the SATD of the biased MV. At block 810, the feature generation circuitry 212 (e.g., the virtual feature generation circuitry 226, etc.) determines a ratio of unbiased MV prediction error to zero MV prediction error. For example, the virtual feature generation circuitry 226 divides the SATD of the unbiased MV by the SATD of the zero MV. After completion of block 810, the example operations 800 return to block 604 of FIG. 6.

FIG. 9 is a flowchart representative of example machine readable instructions and/or example operations 900 that may be executed, instantiated, and/or performed by programmable circuitry to train a neural network to determine the confidence score for the MV. For example, the neural network can classify the MV into various confidences classifications and/or predict an end-point-error for the MV. The example instructions 900 of FIG. 9, when executed by the neural network generation circuitry 214 of FIG. 2, result in a neural network and/or a model thereof (e.g., the confidence classification model(s) 234, the regression analysis model(s) 236, etc.), that can be distributed to other computing systems, such as the confidence scoring circuitry 216 of the example confidence determination circuitry 120 of FIG. 2.

The machine readable instructions and/or operations 900 of FIG. 9 begin at block 902, at which the neural network training circuitry 230 of FIG. 2 accesses the first and/or second training data 238 and/or 240 that include ground truth MVs from a known dataset. Additionally, the first and/or second training data 238 and/or 240 can include generated MVs with verified confidence scores that were determined by the confidence determination circuitry 120.

At block 904, the neural network training circuitry 230 determines confidence scores (e.g., classifications and/or EPEs) for the first and/or second training data 238 and/or 240. At block 906, the example neural network training circuitry 230 generates the first and/or second training data 238 and/or 240 based on the confidence scores.

At block 908, the neural network training circuitry 230 implements the neural network processing circuitry 232 to train the confidence classification model(s) 234 and/or the regression analysis model(s) 236 based on the first and/or second training data 238 and/or 240. In the example of FIG. 9, the training is based on supervised learning. As a result of the training, the confidence classification model(s) 234 and/or the regression analysis model(s) 236 are generated at block 910. Based on the confidence classification model(s) 234 and/or the regression analysis model(s) 236, the neural network is trained to determine confidence scores indicative of how likely the MV corresponds to the ground truth MV associated with the first macroblock in the first video frame. The confidence classification model(s) 234 and/or the regression analysis model(s) 236 can be stored in the database 124 for access by the confidence scoring circuitry 216 of the example confidence determination circuitry 120 of FIG. 2. The example instructions 900 of FIG. 9 end when no additional training (e.g., retraining) is to be performed (block 412), as determined by the neural network training circuitry 230.

FIG. 10 is a block diagram of an example programmable circuitry platform 1000 structured to execute and/or instantiate the example machine-readable instructions and/or the example operations of FIGS. 6-9 to implement the compute device 102 of FIG. 2. The programmable circuitry platform 1000 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a headset (e.g., an augmented reality (AR) headset, a virtual reality (VR) headset, etc.) or other wearable device, or any other type of computing and/or electronic device.

The programmable circuitry platform 1000 of the illustrated example includes programmable circuitry 1012. The programmable circuitry 1012 of the illustrated example is hardware. For example, the programmable circuitry 1012 can be implemented by one or more integrated circuits, logic circuits, FPGAs, microprocessors, CPUs, GPUs, DSPs, and/or microcontrollers from any desired family or manufacturer. The programmable circuitry 1012 may be implemented by one or more semiconductor based (e.g., silicon based) devices. In this example, the programmable circuitry 1012 implements the example MV generation circuitry 118, the example feature generation circuitry 212, the example neural network generation circuitry 214, the example confidence scoring circuitry 216, the example comparison circuitry 218, the example block matching circuitry 202, the example unbiased MV generation circuitry 204, the example biased MV generation circuitry 206, the example cost calculation circuitry 208, the example distortion calculation circuitry 210, the example macroblock management circuitry 220, the example spatial feature generation circuitry 222, the example temporal feature generation circuitry 224, the example virtual feature generation circuitry 226, the example neural network training circuitry 230, the example neural network processing circuitry 232, and/or, more generally, the compute device 102.

The programmable circuitry 1012 of the illustrated example includes a local memory 1013 (e.g., a cache, registers, etc.). The programmable circuitry 1012 of the illustrated example is in communication with main memory 1014, 1016, which includes a volatile memory 1014 and a non-volatile memory 1016, by a bus 1018. The volatile memory 1014 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 1016 may be implemented by flash memory and/or any other desired type of memory device. Access to the main memory 1014, 1016 of the illustrated example is controlled by a memory controller 1017. In some examples, the memory controller 1017 may be implemented by one or more integrated circuits, logic circuits, microcontrollers from any desired family or manufacturer, or any other type of circuitry to manage the flow of data going to and from the main memory 1014, 1016.

The programmable circuitry platform 1000 of the illustrated example also includes interface circuitry 1020. The interface circuitry 1020 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 1022 are connected to the interface circuitry 1020. The input device(s) 1022 permit(s) a user (e.g., a human user, a machine user, etc.) to enter data and/or commands into the programmable circuitry 1012. The input device(s) 1022 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1024 are also connected to the interface circuitry 1020 of the illustrated example. The output device(s) 1024 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), and/or speaker. The interface circuitry 1020 of the illustrated example, thus, typically includes a graphics driver card, a graphics driver chip, and/or graphics processor circuitry such as a GPU.

The interface circuitry 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1026. The communication can be by, for example, an Ethernet connection, a digital subscriber line (DSL) connection, a telephone line connection, a coaxial cable system, a satellite system, a beyond-line-of-site wireless system, a line-of-site wireless system, a cellular telephone system, an optical connection, etc.

The programmable circuitry platform 1000 of the illustrated example also includes one or more mass storage discs or devices 1028 to store firmware, software, and/or data. Examples of such mass storage discs or devices 1028 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1032, which may be implemented by the machine readable instructions of FIGS. 6-9, may be stored in the mass storage device 1028, in the volatile memory 1014, in the non-volatile memory 1016, and/or on at least one non-transitory computer readable storage medium such as a CD or DVD which may be removable.

FIG. 11 is a block diagram of an example implementation of the programmable circuitry 1012 of FIG. 10. In this example, the programmable circuitry 1012 of FIG. 10 is implemented by a microprocessor 1100. For example, the microprocessor 1100 may be a general-purpose microprocessor (e.g., general-purpose microprocessor circuitry). The microprocessor 1100 executes some or all of the machine-readable instructions of the flowcharts of FIGS. 6-9 to effectively instantiate the circuitry of FIG. 2 as logic circuits to perform operations corresponding to those machine readable instructions. In some such examples, the circuitry of FIG. 10 is instantiated by the hardware circuits of the microprocessor 1100 in combination with the machine-readable instructions. For example, the microprocessor 1100 may be implemented by multi-core hardware circuitry such as a CPU, a DSP, a GPU, an XPU, etc. Although it may include any number of example cores 1102 (e.g., 1 core), the microprocessor 1100 of this example is a multi-core semiconductor device including N cores. The cores 1102 of the microprocessor 1100 may operate independently or may cooperate to execute machine readable instructions. For example, machine code corresponding to a firmware program, an embedded software program, or a software program may be executed by one of the cores 1102 or may be executed by multiple ones of the cores 1102 at the same or different times. In some examples, the machine code corresponding to the firmware program, the embedded software program, or the software program is split into threads and executed in parallel by two or more of the cores 1102. The software program may correspond to a portion or all of the machine readable instructions and/or operations represented by the flowcharts of FIGS. 6-9.

The cores 1102 may communicate by a first example bus 1104. In some examples, the first bus 1104 may be implemented by a communication bus to effectuate communication associated with one(s) of the cores 1102. For example, the first bus 1104 may be implemented by at least one of an Inter-Integrated Circuit (I2C) bus, a Serial Peripheral Interface (SPI) bus, a PCI bus, or a PCIe bus. Additionally or alternatively, the first bus 1104 may be implemented by any other type of computing or electrical bus. The cores 1102 may obtain data, instructions, and/or signals from one or more external devices by example interface circuitry 1106. The cores 1102 may output data, instructions, and/or signals to the one or more external devices by the interface circuitry 1106. Although the cores 1102 of this example include example local memory 1120 (e.g., Level 1 (L1) cache that may be split into an L1 data cache and an L1 instruction cache), the microprocessor 1100 also includes example shared memory 1110 that may be shared by the cores (e.g., Level 2 (L2 cache)) for high-speed access to data and/or instructions. Data and/or instructions may be transferred (e.g., shared) by writing to and/or reading from the shared memory 1110. The local memory 1120 of each of the cores 1102 and the shared memory 1110 may be part of a hierarchy of storage devices including multiple levels of cache memory and the main memory (e.g., the main memory 1014, 1016 of FIG. 10). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1102 may be referred to as a CPU, DSP, GPU, etc., or any other type of hardware circuitry. Each core 1102 includes control unit circuitry 1114, arithmetic and logic (AL) circuitry (sometimes referred to as an ALU) 1116, a plurality of registers 1118, the local memory 1120, and a second example bus 1122. Other structures may be present. For example, each core 1102 may include vector unit circuitry, single instruction multiple data (SIMD) unit circuitry, load/store unit (LSU) circuitry, branch/jump unit circuitry, floating-point unit (FPU) circuitry, etc. The control unit circuitry 1114 includes semiconductor-based circuits structured to control (e.g., coordinate) data movement within the corresponding core 1102. The AL circuitry 1116 includes semiconductor-based circuits structured to perform one or more mathematic and/or logic operations on the data within the corresponding core 1102. The AL circuitry 1116 of some examples performs integer based operations. In other examples, the AL circuitry 1116 also performs floating-point operations. In yet other examples, the AL circuitry 1116 may include first AL circuitry that performs integer-based operations and second AL circuitry that performs floating-point operations. In some examples, the AL circuitry 1116 may be referred to as an Arithmetic Logic Unit (ALU).

The registers 1118 are semiconductor-based structures to store data and/or instructions such as results of one or more of the operations performed by the AL circuitry 1116 of the corresponding core 1102. For example, the registers 1118 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1118 may be arranged in a bank as shown in FIG. 11. Alternatively, the registers 1118 may be organized in any other arrangement, format, or structure, such as by being distributed throughout the core 1102 to shorten access time. The second bus 1122 may be implemented by at least one of an I2C bus, a SPI bus, a PCI bus, or a PCIe bus.

Each core 1102 and/or, more generally, the microprocessor 1100 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1100 is a semiconductor device fabricated to include many transistors interconnected to implement the structures described above in one or more integrated circuits (ICs) contained in one or more packages.

The microprocessor 1100 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1100, in the same chip package as the microprocessor 1100 and/or in one or more separate packages from the microprocessor 1100.

FIG. 12 is a block diagram of another example implementation of the programmable circuitry 1012 of FIG. 10. In this example, the programmable circuitry 1012 is implemented by FPGA circuitry 1200. For example, the FPGA circuitry 1200 may be implemented by an FPGA. The FPGA circuitry 1200 can be used, for example, to perform operations that could otherwise be performed by the example microprocessor 1100 of FIG. 11 executing corresponding machine readable instructions. However, once configured, the FPGA circuitry 1200 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1100 of FIG. 11 described above (which is a general purpose device that may be programmed to execute some or all of the machine readable instructions represented by the flowchart(s) of FIGS. 6-9 but whose interconnections and logic circuitry are fixed once fabricated), the FPGA circuitry 1200 of the example of FIG. 12 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 6-9. In particular, the FPGA circuitry 1200 may be thought of as an array of logic gates, interconnections, and switches. The switches can be programmed to change how the logic gates are interconnected by the interconnections, effectively forming one or more dedicated logic circuits (unless and until the FPGA circuitry 1200 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 6-9. As such, the FPGA circuitry 1200 may be configured and/or structured to effectively instantiate some or all of the operations/functions corresponding to the machine readable instructions of the flowchart(s) of FIGS. 6-9 as dedicated logic circuits to perform the operations/functions corresponding to those software instructions in a dedicated manner analogous to an ASIC. Therefore, the FPGA circuitry 1200 may perform the operations/functions corresponding to the some or all of the machine readable instructions of FIGS. 6-9 faster than the general-purpose microprocessor can execute the same.

In the example of FIG. 12, the FPGA circuitry 1200 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

The FPGA circuitry 1200 of FIG. 12, includes example input/output (I/O) circuitry 1202 to obtain and/or output data to/from example configuration circuitry 1204 and/or external hardware 1206. For example, the configuration circuitry 1204 may be implemented by interface circuitry that may obtain a binary file, which may be implemented by a bit stream, data, and/or machine-readable instructions, to configure the FPGA circuitry 1200, or portion(s) thereof. In some such examples, the configuration circuitry 1204 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1206 may be implemented by external hardware circuitry. For example, the external hardware 1206 may be implemented by the microprocessor 1100 of FIG. 11.

The FPGA circuitry 1200 also includes an array of example logic gate circuitry 1208, a plurality of example configurable interconnections 1210, and example storage circuitry 1212. The logic gate circuitry 1208 and the configurable interconnections 1210 are configurable to instantiate one or more operations/functions that may correspond to at least some of the machine readable instructions of FIGS. 6-9 and/or other desired operations. The logic gate circuitry 1208 shown in FIG. 12 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g.,

transistors) are present within each of the logic gate circuitry 1208 to enable configuration of the electrical structures and/or the logic gates to form circuits to perform desired operations/functions. The logic gate circuitry 1208 may include other electrical structures such as look-up tables (LUTs), registers (e.g., flip-flops or latches), multiplexers, etc.

The configurable interconnections 1210 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1208 to program desired logic circuits.

The storage circuitry 1212 of the illustrated example is structured to store result(s) of the one or more of the operations performed by corresponding logic gates. The storage circuitry 1212 may be implemented by registers or the like. In the illustrated example, the storage circuitry 1212 is distributed amongst the logic gate circuitry 1208 to facilitate access and increase execution speed.

The example FPGA circuitry 1200 of FIG. 12 also includes example dedicated operations circuitry 1214. In this example, the dedicated operations circuitry 1214 includes special purpose circuitry 1216 that may be invoked to implement commonly used functions to avoid the need to program those functions in the field. Examples of such special purpose circuitry 1216 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1200 may also include example general purpose programmable circuitry 1218 such as an example CPU 1220 and/or an example DSP 1222. Other general purpose programmable circuitry 1218 may additionally or alternatively be present such as a GPU, an XPU, etc., that can be programmed to perform other operations.

Although FIGS. 11 and 12 illustrate two example implementations of the programmable circuitry 1012 of FIG. 10, many other approaches are contemplated. For example, FPGA circuitry may include an on-board CPU, such as one or more of the example CPU 1220 of FIG. 11. Therefore, the programmable circuitry 1012 of FIG. 10 may additionally be implemented by combining at least the example microprocessor 1100 of FIG. 11 and the example FPGA circuitry 1200 of FIG. 12. In some such hybrid examples, one or more cores 1102 of FIG. 11 may execute a first portion of the machine readable instructions represented by the flowchart(s) of FIGS. 6-9 to perform first operation(s)/function(s), the FPGA circuitry 1200 of FIG. 12 may be configured and/or structured to perform second operation(s)/function(s) corresponding to a second portion of the machine readable instructions represented by the flowcharts of FIG. 6-9, and/or an ASIC may be configured and/or structured to perform third operation(s)/function(s) corresponding to a third portion of the machine readable instructions represented by the flowcharts of FIGS. 6-9.

It should be understood that some or all of the circuitry of FIG. 2 may, thus, be instantiated at the same or different times. For example, same and/or different portion(s) of the microprocessor 1100 of FIG. 11 may be programmed to execute portion(s) of machine-readable instructions at the same and/or different times. In some examples, same and/or different portion(s) of the FPGA circuitry 1200 of FIG. 12 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1100 of FIG. 11 may execute machine readable instructions in one or more threads executing concurrently and/or in series. In some examples, the FPGA circuitry 1200 of FIG. 12 may be configured and/or structured to carry out operations/functions concurrently and/or in series. Moreover, in some examples, some or all of the circuitry of FIG. 2 may be implemented within one or more virtual machines and/or containers executing on the microprocessor 1100 of FIG. 11.

In some examples, the programmable circuitry 1012 of FIG. 10 may be in one or more packages. For example, the microprocessor 1100 of FIG. 11 and/or the FPGA circuitry 1200 of FIG. 12 may be in one or more packages. In some examples, an XPU may be implemented by the programmable circuitry 1012 of FIG. 10, which may be in one or more packages. For example, the XPU may include a CPU (e.g., the microprocessor 1100 of FIG. 11, the CPU 1220 of FIG. 12, etc.) in one package, a DSP (e.g., the DSP 1222 of FIG. 12) in another package, a CPU in yet another package, and an FPGA (e.g., the FPGA circuitry 1200 of FIG. 12) in still yet another package.

A block diagram illustrating an example software distribution platform 1305 to distribute software such as the example machine readable instructions 1032 of FIG. 10 to other hardware devices (e.g., hardware devices owned and/or operated by third parties from the owner and/or operator of the software distribution platform) is illustrated in FIG. 13. The example software distribution platform 1305 may be implemented by any computer server, data facility, cloud service, etc., capable of storing and transmitting software to other computing devices. The third parties may be customers of the entity owning and/or operating the software distribution platform 1305. For example, the entity that owns and/or operates the software distribution platform 1305 may be a developer, a seller, and/or a licensor of software such as the example machine readable instructions 1032 of FIG. 10. The third parties may be consumers, users, retailers, OEMs, etc., who purchase and/or license the software for use and/or re-sale and/or sub-licensing. In the illustrated example, the software distribution platform 1305 includes one or more servers and one or more storage devices. The storage devices store the machine readable instructions 1032, which may correspond to the example machine readable instructions of FIGS. 6-9, as described above. The one or more servers of the example software distribution platform 1305 are in communication with an example network 1310, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1032 from the software distribution platform 1305. For example, the software, which may correspond to the example machine readable instructions of FIG. 6-9, may be downloaded to the example programmable circuitry platform 1000, which is to execute the machine readable instructions 1032 to implement the compute device 102. In some examples, one or more servers of the software distribution platform 1305 periodically offer, transmit, and/or force updates to the software (e.g., the example machine readable instructions 1032 of FIG. 10) to ensure improvements, patches, updates, etc., are distributed and applied to the software at the end user devices. Although referred to as software above, the distributed "software" could alternatively be firmware.

From the foregoing, it will be appreciated that example systems, apparatus, articles of manufacture, and methods have been disclosed that determine a confidence score (e.g., level of trustworthiness) for a motion vector. Disclosed systems, apparatus, articles of manufacture, and methods improve the efficiency of using a computing device by helping to enable applications (e.g., true motion analyses such as kinematic (velocity, acceleration, etc.) calculations, etc.) that require high resolution and high frame rate to leverage existing performant encoder motion estimation hardware to determine reliable motion detection of objects based on the motion vector(s). Furthermore, examples disclosed herein improve the reliability of a compute device to analyze the true motion (e.g., real kinematics) of an object while discarding fewer results and allocating fewer compute resources to calculations on erroneous winning MVs. Disclosed examples can also conserve network bandwidth and compute power because erroneous MVs are discarded rather than transmitted to other compute device(s). Additionally or alternatively, confidence scores can be provided to users or end customers to represent a level of trustworthiness of the winning MV. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to determine confidence scores for motion vectors are disclosed herein. Further examples and combinations thereof include the following:

Example 1 includes an apparatus to determine confidence of motion vectors comprising interface circuitry to obtain video data including video frames comprising a first video frame and a second video frame, computer readable instructions, and programmable circuitry to at least one of instantiate or execute the computer readable instructions to generate feature data associated with a motion vector, the motion vector generated based on a first block of pixel data in the first video frame and a second block of pixel data in the second video frame, determine a confidence score for the motion vector based on a model and the feature data, and concatenate the motion vector and the confidence score to output an estimated likelihood that the motion vector is accurate.

Example 2 includes the apparatus of example 1, wherein the programmable circuitry includes one or more of at least one of a central processor unit, a graphics processor unit, or a digital signal processor, the at least one of the central processor unit, the graphics processor unit, or the digital signal processor having control circuitry to control data movement within the processor circuitry, arithmetic and logic circuitry to perform one or more first operations corresponding to machine-readable data, and one or more registers to store a result of the one or more first operations, the machine-readable data in the apparatus, a Field Programmable Gate Array (FPGA), the FPGA including logic gate circuitry, a plurality of configurable interconnections, and storage circuitry, the logic gate circuitry and the plurality of the configurable interconnections to perform one or more second operations, the storage circuitry to store a result of the one or more second operations, or Application Specific Integrated Circuitry (ASIC) including logic gate circuitry to perform one or more third operations.

Example 3 includes the apparatus of example 1, wherein the feature data includes first spatial feature data associated with the first block of pixel data, and the programmable circuitry is to identify a plurality of blocks of pixel data nested within the first block of pixel data, and generate the first spatial feature data associated with the first block of pixel data and second feature data associated with the plurality of blocks of pixel data.

Example 4 includes the apparatus of example 1, wherein the feature data is further based on a first alternate motion vector, the first alternate motion vector generated based on the first block of pixel data and a third block of pixel data in the second video frame, the first alternate motion vector having a first prediction error corresponding to a pixel difference of the first block of pixel data and the third block of pixel data, the feature data associated with the first alternate motion vector including the first prediction error.

Example 5 includes the apparatus of example 4, wherein the feature data is further based on a second alternate motion vector, the second alternate motion vector generated based on the first block of pixel data and a fourth block of pixel data in the second video frame, the second alternate motion vector having a second prediction error and a cost, the second prediction error corresponding to a pixel difference of the first block of pixel data and the fourth block of pixel data, the cost corresponding to an average vector difference of the second alternate motion vector and a plurality of other motion vectors adjacent to the second alternate motion vector, the feature data associated with the second alternate motion vector including the second prediction error and the cost.

Example 6 includes the apparatus of example 5, wherein the feature data is further based on a third alternate motion vector, the third alternate motion vector generated based on the first block of pixel data and a fifth block of pixel data in the second video frame, the third alternate motion vector having a third prediction error corresponding to a pixel difference of the first block of pixel data and the fifth block of pixel data, a coordinate position of the fifth block of pixel data being equal to a coordinate position of the first block of pixel data, the feature data associated with the third alternate motion vector including the third prediction error.

Example 7 includes the apparatus of example 6, wherein the programmable circuitry is to determine a plurality of combinations of the feature data, the confidence score further based on the plurality of combinations of the feature data.

Example 8 includes the apparatus of example 7, wherein the plurality of combinations of the feature data includes at least a distance between the first alternate motion vector and the second alternate motion vector, a ratio of the first prediction error to the second prediction error, or a ratio of the first prediction error to the third prediction error.

Example 9 includes the apparatus of example 1, wherein the programmable circuitry is to execute the model using a neural network trained to classify the motion vector into a category based on the confidence score.

Example 10 includes the apparatus of example 1, the programmable circuitry is to output the motion vector when the confidence score satisfies a threshold, and discard the motion vector when the confidence score does not satisfy the threshold.

Example 11 includes the apparatus of example 1, wherein, when the confidence score satisfies a threshold, the programmable circuitry is to at least output the motion vector to motion analysis circuitry for a motion analysis of an object represented by the first block of pixel data, the motion analysis including a velocity calculation of the object, or output the motion vector to the interface circuitry for transmission to a compute device for the motion analysis.

Example 12 includes a non-transitory machine readable storage medium comprising instructions to cause programmable circuitry to at least generate feature data associated with a motion vector, the motion vector generated based on a first block of pixel data in a first video frame and a second block of pixel data in a second video frame, determine a confidence score for the motion vector based on a model and the feature data, and concatenate the motion vector and the confidence score to output an estimated likelihood that the motion vector is accurate.

Example 13 includes the non-transitory machine readable storage medium of example 12, wherein the feature data includes first spatial feature data associated with the first block of pixel data, and the instructions are to cause programmable circuitry to identify a plurality of blocks of pixel data nested within the first block of pixel data, and generate the first spatial feature data associated with the first block of pixel data and second feature data associated with the plurality of blocks of pixel data.

Example 14 includes the non-transitory machine readable storage medium of example 12, wherein the feature data is further based on a first alternate motion vector, the first alternate motion vector generated based on the first block of pixel data and a third block of pixel data in the second video frame, the first alternate motion vector having a first prediction error corresponding to a pixel difference of the first block of pixel data and the third block of pixel data, the feature data associated with the first alternate motion vector including the first prediction error.

Example 15 includes the non-transitory machine readable storage medium of example 14, wherein the feature data is further based on a second alternate motion vector, the second alternate motion vector generated based on the first block of pixel data and a fourth block of pixel data in the second video frame, the second alternate motion vector having a second prediction error and a cost, the second prediction error corresponding to a pixel difference of the first block of pixel data and the fourth block of pixel data, the cost corresponding to an average vector difference of the second alternate motion vector and a plurality of other motion vectors adjacent to the second alternate motion vector, the feature data associated with the second alternate motion vector including the second prediction error and the cost.

Example 16 includes the non-transitory machine readable storage medium of example 15, wherein the feature data is further based on a third alternate motion vector generated based on the first block of pixel data and a fifth block of pixel data in the second video frame, the third alternate motion vector having a third prediction error corresponding to a pixel difference of the first block of pixel data and the fifth block of pixel data, a coordinate position of the fifth block of pixel data being equal to a coordinate position of the first block of pixel data, the feature data associated with the third alternate motion vector including the third prediction error.

Example 17 includes the non-transitory machine readable storage medium of example 16, wherein the instructions are to cause programmable circuitry to determine a plurality of combinations of the feature data, the confidence score further based on the plurality of combinations of the feature data.

Example 18 includes a method comprising generating feature data associated with a motion vector, the motion vector generated based on a first block of pixel data in a first video frame and a second block of pixel data in a second video frame, determining a confidence score for the motion vector based on a model and the feature data, and concatenating the motion vector and the confidence score to output an estimated likelihood that the motion vector is accurate.

Example 19 includes the method of example 18, wherein the feature data includes first spatial feature data associated with the first block of pixel data, and further including identifying a plurality of blocks of pixel data nested within the first block of pixel data, and generating the first spatial feature data associated with the first block of pixel data and second feature data associated with the plurality of blocks of pixel data.

Example 20 includes the method of example 18, wherein the feature data is further based on a first alternate motion vector, the first alternate motion vector generated based on the first block of pixel data and a third block of pixel data in the second video frame, the first alternate motion vector having a first prediction error corresponding to a pixel difference of the first block of pixel data and the third block of pixel data, the feature data associated with the first alternate motion vector including the first prediction error.

Example 21 includes the method of example 20, wherein the feature data is further based on a second alternate motion vector, the second alternate motion vector generated based on the first block of pixel data and a fourth block of pixel data in the second video frame, the second alternate motion vector having a second prediction error and a cost, the second prediction error corresponding to a pixel difference of the first block of pixel data and the fourth block of pixel data, the cost corresponding to an average vector difference of the second alternate motion vector and a plurality of other motion vectors adjacent to the second alternate motion vector, the feature data associated with the second alternate motion vector including the second prediction error and the cost.

Example 22 includes the method of example 21, wherein the feature data is further based on a third alternate motion vector generated based on the first block of pixel data and a fifth block of pixel data in the second video frame, the third alternate motion vector having a third prediction error corresponding to a pixel difference of the first block of pixel data and the fifth block of pixel data, a coordinate position of the fifth block of pixel data being equal to a coordinate position of the first block of pixel data, the feature data associated with the third alternate motion vector including the third prediction error.

Example 23 includes the method of example 22, further including determining a plurality of combinations of the feature data, the confidence score further based on the plurality of combinations of the feature data.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus to determine confidence of motion vectors, the apparatus comprising:

   interface circuitry to obtain video data including video frames comprising a first video frame and a second video frame;
   computer readable instructions; and
   programmable circuitry to at least one of instantiate or execute the computer readable instructions to:

   generate feature data associated with a motion vector, the motion vector generated based on a first block of pixel data in the first video frame and a second block of pixel data in the second video frame;
   determine a confidence score for the motion vector based on a model and the feature data; and
   concatenate the motion vector and the confidence score to output an estimated likelihood that the motion vector is accurate.

2. The apparatus of claim 1, wherein the feature data includes first spatial feature data associated with the first block of pixel data, and the programmable circuitry is to:

   identify a plurality of blocks of pixel data nested within the first block of pixel data; and
   generate the first spatial feature data associated with the first block of pixel data and second feature data associated with the plurality of blocks of pixel data.

3. The apparatus of claim 1, wherein the feature data is further based on a first alternate motion vector, the first alternate motion vector generated based on the first block of pixel data and a third block of pixel data in the second video frame, the first alternate motion vector having a first prediction error corresponding to a pixel difference of the first block of pixel data and the third block of pixel data, the feature data associated with the first alternate motion vector including the first prediction error.

4. The apparatus of claim 3, wherein the feature data is further based on a second alternate motion vector, the second alternate motion vector generated based on the first block of pixel data and a fourth block of pixel data in the second video frame, the second alternate motion vector having a second prediction error and a cost, the second prediction error corresponding to a pixel difference of the first block of pixel data and the fourth block of pixel data, the cost corresponding to an average vector difference of the second alternate motion vector and a plurality of other motion vectors adjacent to the second alternate motion vector, the feature data associated with the second alternate motion vector including the second prediction error and the cost.

5. The apparatus of claim 4, wherein the feature data is further based on a third alternate motion vector, the third alternate motion vector generated based on the first block of pixel data and a fifth block of pixel data in the second video frame, the third alternate motion vector having a third prediction error corresponding to a pixel difference of the first block of pixel data and the fifth block of pixel data, a coordinate position of the fifth block of pixel data being equal to a coordinate position of the first block of pixel data, the feature data associated with the third alternate motion vector including the third prediction error.

6. The apparatus of claim 5, wherein the programmable circuitry is to determine a plurality of combinations of the feature data, the confidence score further based on the plurality of combinations of the feature data.

7. The apparatus of any one of claims 1 to 6, wherein the programmable circuitry is to execute the model using a neural network trained to classify the motion vector into a category based on the confidence score.

8. A method comprising:

generating feature data associated with a motion vector, the motion vector generated based on a first block of pixel data in a first video frame and a second block of pixel data in a second video frame;
determining a confidence score for the motion vector based on a model and the feature data; and
concatenating the motion vector and the confidence score to output an estimated likelihood that the motion vector is accurate.

9. The method of claim 8, wherein the feature data includes first spatial feature data associated with the first block of pixel data, and further including:

identifying a plurality of blocks of pixel data nested within the first block of pixel data; and
generating the first spatial feature data associated with the first block of pixel data and second feature data associated with the plurality of blocks of pixel data.

10. The method of claim 8, wherein the feature data is further based on a first alternate motion vector, the first alternate motion vector generated based on the first block of pixel data and a third block of pixel data in the second video frame, the first alternate motion vector having a first prediction error corresponding to a pixel difference of the first block of pixel data and the third block of pixel data, the feature data associated with the first alternate motion vector including the first prediction error.

11. The method of claim 10, wherein the feature data is further based on a second alternate motion vector, the second alternate motion vector generated based on the first block of pixel data and a fourth block of pixel data in the second video frame, the second alternate motion vector having a second prediction error and a cost, the second prediction error corresponding to a pixel difference of the first block of pixel data and the fourth block of pixel data, the cost corresponding to an average vector difference of the second alternate motion vector and a plurality of other motion vectors adjacent to the second alternate motion vector, the feature data associated with the second alternate motion vector including the second prediction error and the cost.

12. The method of claim 11, wherein the feature data is further based on a third alternate motion vector generated based on the first block of pixel data and a fifth block of pixel data in the second video frame, the third alternate motion vector having a third prediction error corresponding to a pixel difference of the first block of pixel data and the fifth block of pixel data, a coordinate position of the fifth block of pixel data being equal to a coordinate position of the first block of pixel data, the feature data associated with the third alternate motion vector including the third prediction error.

13. The method of claim 12, further including determining a plurality of combinations of the feature data, the confidence score further based on the plurality of combinations of the feature data.

14. The method of any one of claims 8 to 13, further including executing the model using a neural network trained to classify the motion vector into a category based on the confidence score.

15. A computer program comprising instructions to cause one or more processors to perform the method of any one of claims 8 to 14.

100

DATABASE 124

COMPUTE DEVICE 102

PROGRAMMABLE CIRCUITRY 108

MOTION VECTOR GENERATION CIRCUITRY 118

CONFIDENCE DETERMINATION CIRCUITRY 120

MOTION ANALYSIS CIRCUITRY 122

STORAGE DEVICE(S) 110

INTERFACE CIRCUITRY 112

VIDEO ENCODER CIRCUITRY 114

116

NETWORK 106

COMPUTE DEVICE(S) 104

FIG. 1

FIG. 2

EP 4 443 881 A1

| | PER-BLOCK FIELD NAME | TYPE | SURF | PLANE | COMMENTS |
|---|---|---|---|---|---|
| 308 | BEST INTRA LUMA RAW SATD (16b) | SPATIAL | SRC | LUMA | SPATIAL REDUNDANCY |
| 310 | LUMA SRC VARIANCE | SPATIAL | SRC | LUMA | BIASED VARIANCE |
| 312 | CHROMA U SRC VARIANCE | SPATIAL | SRC | CHROMA | BIASED VARIANCE |
| 314 | CHROMA V SRC VARIANCE | SPATIAL | SRC | CHROMA | BIASED VARIANCE |
| 316 | AVERAGE BLOCK LUMINANCE SRC (8b MSB) | SPATIAL | SRC | LUMA | AVERAGE BRIGHTNESS |
| 318 | MIN BLOCK LUMINANCE SRC (8b MSB) | SPATIAL | SRC | LUMA | DARKEST PIXEL |
| 320 | BLOCK LUMINANCE RANGE (8b MSB) | SPATIAL | SRC | LUMA | CONTRAST |
| 322 | BEST INTRA OPEN-LOOP MODE | SPATIAL | SRC | LUMA | MAPPED TO CODEC |
| 324 | PALETTE HASHCOUNT [ONLY VALID FOR 16x16] | SPATIAL | SRC | N/A | # OF ENTRIES IN HASHTABLE, CLAMPED TO 64 |
| 326 | BEST DIST INTER MV REFID L0 | TEMPORAL | L0 | LUMA | REFID OF WINNING BIASED MV |
| 328 | UNBIASED BEST INTER MV REFID L0 | TEMPORAL | L0 | LUMA | REFID OF WINNING UNBIASED MV |
| 330 | BEST DIST INTEGER MV xy L0 | TEMPORAL | L0 | N/A | WINNING BIASED MV FRAME COORDINATE |
| 332 | BEST DIST INTER RAW LUMA SATD L0 | TEMPORAL | L0 | LUMA | PREDICTION ERROR OF WINNING BIASED MV |
| 334 | BEST DIS INTEGER MV COST L0 | TEMPORAL | L0 | N/A | COST OF WINNING BIASED MV |
| 336 | UNBIASED BEST INTEGER MV xy L0 | TEMPORAL | L0 | LUMA | WINNING UNBIASED MV FRAME COORDINATE |
| 338 | UNBIASED BEST INTER RAW LUMA SATD L0 | TEMPORAL | L0 | LUMA | PREDICTION ERROR OF WINNING UNBIASED MV |
| 340 | ZMV INTER RAW LUMA SATD L0_0 | TEMPORAL | L0 | LUMA | PREDICTION ERROR OF ZERO MOTION |
| 342 | BEST DIST INTEGER MV xy L1 | TEMPORAL | L1 | N/A | WINNING BIASED MV |
| 344 | BEST DIST INTER RAW LUMA SATD L1 | TEMPORAL | L1 | LUMA | PREDICTION ERROR OF WINNING BIASED MV |
| 346 | BEST DIST INTEGER MV COST L1 | TEMPORAL | L1 | N/A | COST OF WINNING BIASED MV |
| 348 | UNBIASED BEST INTEGER MV COST L1 | TEMPORAL | L1 | LUMA | WINNING UNBIASED MV |
| 350 | UNBIASED BEST INTER RAW LUMA SATD L1 | TEMPORAL | L1 | LUMA | PREDICTION ERROR OF WINNING UNBIASED MV |
| 352 | ZMV INTER RAW LUMA SATD L1_0 | TEMPORAL | L1 | LUMA | PREDICTION ERROR OF ZERO MOTION |

FIG. 3

FIG. 4

FIG. 5

600

START

602

GENERATE FEATURE DATA

604

DETERMINE CONFIDENCE SCORE FOR MOTION VECTOR BASED ON
MODEL AND FEATURE DATA

606

CONCATENATE MOTION VECTOR AND CONFIDENCE SCORE

608

NO ADDITIONAL MOTION VECTORS?

YES

END

FIG. 6

700

602
GENERATE FEATURE DATA

702
IDENTIFY FIRST MACROBLOCK IN FIRST FRAME

704
GENERATE SPATIAL FEATURE DATA CORRESPONDING TO FIRST MACROBLOCK

706
GENERATE TEMPORAL FEATURE DATA CORRESPONDING TO MOTION VECTORS OF FIRST MACROBLOCK

708
GENERATE VIRTUAL FEATURE DATA BASED ON TEMPORAL FEATURE DATA AND/OR SPATIAL FEATURE DATA

RETURN

## FIG. 7

800

708

GENERATE VIRTUAL FEATURE DATA BASED ON TEMPORAL FEATURE DATA AND/OR SPATIAL FEATURE DATA

802

OBTAIN BIASED MOTION VECTOR AND UNBIASED MOTION VECTOR FOR FIRST MACROBLOCK

804

DETERMINE DISTANCE BETWEEN BIASED MOTION VECTOR AND UNBIASED MOTION VECTOR

806

OBTAIN PREDICTION ERRORS OF UNBIASED, BIASED, AND ZERO MOTION VECTORS

808

DETERMINE RATIO OF UNBIASED MV PREDICTION ERROR TO BIASED MV PREDICTION ERROR

810

DETERMINE RATIO OF UNBIASED MV PREDICTION ERROR TO ZERO MV PREDICTION ERROR

RETURN

FIG. 8

900

START

902
ACCESS GROUND TRUTH MOTION VECTORS FROM TRAINING DATA

904
CLASSIFY MOTION VECTORS ASSOCIATED WITH TRAINING DATA

906
GENERATE TRAINING DATA BASED ON CLASSIFICATIONS

908
TRAIN NEURAL NETWORK

910
GENERATE CONFIDENCE CLASSIFICATION MODEL(S)

912
PERFORM ADDITIONAL TRAINING?

END

FIG. 9

**FIG. 10**

FIG. 11

**FIG. 12**

FIG. 13

Europäisches
Patentamt

European
Patent Office

Office européen
des brevets

# EUROPEAN SEARCH REPORT

**Application Number**

EP 23 21 6399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/296816 A1 (DREZNER DAVID [IL] ET AL) 3 December 2009 (2009-12-03) | 1,7,8, 14,15 | INV. H04N19/513 |
| Y | * paragraphs [0038], [0040], [0041], [0133]; figure 2 * | 3,10 | |
| X | US 10 026 155 B1 (FURUKAWA EIJI [JP]) 17 July 2018 (2018-07-17) | 1,7,8, 14,15 | |
| Y | * column 4, line 66 - column 5, line 52; figure 2 * | 3,10 | |
| X | JP 2000 331169 A (FUJITSU LTD) 30 November 2000 (2000-11-30) | 1,7,8, 14,15 | |
| Y | * paragraphs [0004] - [0007], [0022] - [0025]; figures * | 3,10 | |
| X | US 6 532 264 B1 (KAHN BARRY [US]) 11 March 2003 (2003-03-11) | 1,7,8, 14,15 | |
| Y | * columns 5-11; figures 3,4,10 * | 3,10 | |
| Y | US 2011/229056 A1 (ROBERTSON MARK A [US] ET AL) 22 September 2011 (2011-09-22) * paragraphs [0078] - [0085]; figure 14 * | 3,10 | TECHNICAL FIELDS SEARCHED (IPC) |
| A | US 2008/247462 A1 (DEMOS GARY [US]) 9 October 2008 (2008-10-09) * paragraphs [0150] - [0169] * | 1-15 | H04N |

-/--

The present search report has been drawn up for all claims

| Place of search | Date of completion of the search | Examiner |
|---|---|---|
| Berlin | 10 June 2024 | Exner, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 23 21 6399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | LAN DONG ET AL: "Object Tracking in Compressed Video with Confidence Measures", PROCEEDINGS / 2006 IEEE INTERNATIONAL CONFERENCE ON MULTIMEDIA AND EXPO, ICME 2006 : JULY 9 - 12, 2006, HILTON, TORONTO, TORONTO, ONTARIO, CANADA, IEEE SERVICE CENTER, PISCATAWAY, NJ, 9 July 2006 (2006-07-09), pages 753-756, XP032964852, DOI: 10.1109/ICME.2006.262408 ISBN: 978-1-4244-0366-0 * page 754 * ----- | | |

TECHNICAL FIELDS
SEARCHED       (IPC)

The present search report has been drawn up for all claims

| Place of search | Date of completion of the search | Examiner |
|---|---|---|
| Berlin | 10 June 2024 | Exner, Alfred |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

      .................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 21 6399

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | Publication date | Patent family member(s) | Publication date |
|---|---|---|---|
| US 2009296816 A1 | 03-12-2009 | NONE | |
| US 10026155 B1 | 17-07-2018 | CN 109328454 A | 12-02-2019 |
| | | JP 6326180 B1 | 16-05-2018 |
| | | JP WO2018220711 A1 | 27-06-2019 |
| | | US 10026155 B1 | 17-07-2018 |
| | | WO 2018220711 A1 | 06-12-2018 |
| JP 2000331169 A | 30-11-2000 | JP 4356140 B2 | 04-11-2009 |
| | | JP 2000331169 A | 30-11-2000 |
| US 6532264 B1 | 11-03-2003 | AU 5518801 A | 08-10-2001 |
| | | US 6532264 B1 | 11-03-2003 |
| | | WO 0174072 A1 | 04-10-2001 |
| US 2011229056 A1 | 22-09-2011 | NONE | |
| US 2008247462 A1 | 09-10-2008 | EP 2140687 A2 | 06-01-2010 |
| | | US 2008247462 A1 | 09-10-2008 |
| | | WO 2008140656 A2 | 20-11-2008 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023085837 W